# EUROPÄISCHE PATENTSCHRIFT

(11) **EP 4 009 762 B1**
(45) Veröffentlichungstag und Bekanntmachung des Hinweises auf die Patenterteilung: **14.01.2026**
(21) Anmeldenummer: 20729995.9
(22) Anmeldetag: 28.05.2020
(51) Int. Cl.: A01C 7/04

(54) **DOSIERSYSTEM EINER LANDWIRTSCHAFTLICHEN MASCHINE**
DOSING SYSTEM OF AGRICULTURAL MACHINE
SYSTÈME DE DOSAGE POUR MACHINE AGRICOL

(30) Priorität: 06.08.2019 DE 102019121150
(43) Veröffentlichungstag der Anmeldung: 15.06.2022
(73) Patentinhaber: Amazonen-Werke H. Dreyer SE & Co. KG, 49205 Hasbergen (DE)
(72) Erfinder: BULMAHN, Simon, 26655 Westerstede (DE); CLAUSSEN, Hendrik, 27801 Dötlingen Ostrrittrum (DE)
(86) Internationale Anmeldenummer: PCT/EP2020/064828
(87) Internationale Veröffentlichungsnummer: WO 2021/023409

(56) Entgegenhaltungen:
- EP-A1- 0 216 057
- EP-A1- 1 637 026
- WO-A1-2012/140349
- US-A- 4 450 979
- US-A1- 2018 220 579

## Beschreibung

Die Erfindung betrifft eine landwirtschaftliche Maschine gemäß dem Oberbegriff des Patentanspruches 1.

Ein Dosiersystem einer derartigen landwirtschaftlichen Maschine ist in der deutschen Patentschrift 1 137 889 beschrieben. Dieses Dosiersystem einer als Einzelkornsämaschine ausgebildeten landwirtschaftlichen Maschine weist ein Vereinzelungsgehäuse auf. In dem Vereinzelungsgehäuse ist zumindest eine Vereinzelungsvorrichtung des Dosiersystems angeordnet. Auf der Vereinzelungsseite der Vereinzelungsvorrichtung befindet sich im Verteilergehäuse sich ein zugeordneter Saatgutvorratsraum. Dem Saatgutvorratsraum des Vereinzelungsgehäuses ist unmittelbar ein Vorratsbehälter zugeordnet. Zwischen dem Vorratsbehälter und dem Saatgutvorratsraum ist eine Trennwand angeordnet. In der Trennwand ist zumindest eine Saatgutdurchtrittsöffnung, deren Durchtrittgröße durch zumindest ein verstellbares Schieberelement mittels zumindest eines Einstellelementes einstellbar ist, angeordnet.

Bei diesem bekannten Dosiersystem wird das Schieberelement mittels eines manuellen Einstellmittel verstellt, so dass sich hierüber die Durchtrittsöffnung manuell einstellen lässt. Hierdurch lässt sich die Durchtrittsöffnung zur Einstellung der Höhe der Körner in dem Saatgutvorratsraum entsprechend einstellen. An jedem Dosiersystem einer eine Vielzahl von Einzelkornsäaggregaten aufweisenden Einzelkornsämaschine muss manuell das jeweilige Schieberelement entsprechend der auszubringenden Saatgutart eingestellt werden. Manuelle Einstellungen bei einer Vielzahl von gleichen Elementen können Fehlbedienungen und Fehleinstellungen unterliegen, so dass nicht immer gewährleistet ist, dass alle Schieberelemente in der gewünschten Weise eingestellt sind. Darüber hinaus lassen sich während der Ausbringarbeit keine Einstellungen des Schieberelementes ohne Unterbrechung des Ausbringvorganges vornehmen, falls dies die Einsatzbedingungen erfordern.

Aus der US 4 450 979 A ist eine Saatgutdosiervorrichtung für mehrreihige Sämaschinen nach dem Oberbegriff des Anspruchs 1 bekannt.

Der Erfindung liegt die Aufgabe zu Grunde, eine verbesserte Einstellmöglichkeit für das Schieberelement zur Einstellung der Größe der Durchtrittsöffnung zwischen dem Vorratsbehälter und dem Saatgutvorratsraum, vor allem auch während der Ausbringarbeit zu schaffen.

Diese Aufgabe wird erfindungsgemäß dadurch gelöst, dass das zumindest eine Einstellelement des verstellbaren Schieberelementes als motorisches Stellelement ausgebildet ist, dass das motorische Stellelement mittels einer Datenübertragungsvorrichtung, insbesondere Datenleitung, mit einem der landwirtschaftlichen Maschine zugeordneten elektronischen Bordrechner verbunden ist, dass in zumindest einem Speicher des Bordrechners Daten zur Einstellung der von der Schieberstellung bestimmten Durchtrittgröße der Durchtrittsöffnung eingespeichert und/oder hinterlegt sind und entsprechend das motorische Stellelement des Schiebers zur Einstellung der Durchtrittgröße der Durchtrittsöffnung betätigbar ist.

Infolge dieser Maßnahmen wird die Grundvoraussetzung dafür geschaffen, dass der Absperrschieber zur Einstellung der Durchtrittgröße der Durchtrittsöffnung mittels des motorischen Stellelementes von einem fernen Ort, beispielsweise durch den elektronischen Bordrechner situationsangepasst verstellt und eingestellt werden kann, so dass eine automatische Einstellung möglich ist. Entsprechend der in dem Bordrechner hinterlegten Daten wird bei dem Aufrufen beispielsweise der auszubringenden Saatgutart die Durchtrittgröße der Durchtrittsöffnung durch den Schieber automatisch auf die auszubringende Saatgutart eingestellt. Hierbei ist es möglich, dass diese Verstellung mit der Abstreifereinstellung und den entsprechenden Daten hierfür über dem Bordrechner miteinander verknüpft sind. Somit werden sowohl der Abstreifer für die vereinzelte Ausbringung der zu zu vereinzelnden Samenkörner wie auch das Schieberelement zur Einstellung der Durchtrittgröße der Durchtrittsöffnung auf ihre Grundeinstellung eingestellt.

Der Abstreifer sorgt dafür, dass zu viel an den mit einer Druckdifferenz beaufschlagten Vereinzelungsöffnungen der Vereinzelungsvorrichtung anhaftenden Samenkörner abgestreift werden, so dass an jeder mit einer Druckdifferenz beaufschlagten Vereinzelungsöffnungen der Vereinzelungsvorrichtung immer nur ein Saatkorn zum Ausbringen und zur Ablage im Boden anhaftet.

Um einerseits sicherzustellen das zumindest immer eine ausreichende Menge Samenkörner der Vereinzelungsvorrichtung zugeführt werden und andererseits der Füllstand in dem Raum zwischen der Trennwand und der Vereinzelungsseite der Vereinzelungsvorrichtung nicht zu hoch ist, ist vorgesehen, dass die in dem Speicher des Bordrechners eingespeicherten und/oder hinterlegten Daten zur Einstellung der Durchtrittgröße der Durchtrittsöffnung zumindest Abhängigkeiten zwischen der von der Schieberstellung bestimmten Durchtrittgröße der Durchtrittsöffnung einerseits und andererseits der Saatgutart, Ausbringmenge, Saatgutfüllstand im Raum zwischen der Trennwand und der Vereinzelungsseite der Vereinzelungsvorrichtung und/oder Hangneigung sind. Hierdurch wird sichergestellt, dass der Schieber immer in eine den Ausbringbedingungen angepasste entsprechende Position eingestellt ist, damit situationsangepasst die Durchtrittgröße der Durchtrittsöffnung eine optimierte Zuführung des Saatgutes zu der Vereinzelungsvorrichtung sicherstellt.

Um eine situationsangepasste Schieberstellung zur Einstellung der situationsangepassten Durchtrittgröße der Durchtrittsöffnung automatisch sicherzustellen, ist vorgesehen, dass in zumindest einem Speicher des Bordrechners Abhängigkeiten zwischen der von der Schieberstellung bestimmten Durchtrittgröße der Durchtrittsöffnung einerseits und andererseits der Saatgutart, Ausbringmenge und/oder Hangneigung eingespeichert und/oder hinterlegt sind, und dass der Bordrechner dazu eingerichtet ist, zumindest entsprechend einer der Abhängigkeiten das motorische Stellelement zur Einstellung der Durchtrittgröße der Durchtrittsöffnung zu betätigen.

Bei einem Dosiersystem mit einer Vereinzelungseinrichtung mit zumindest einem drehbar angetriebenen Vereinzelungselement mit einer Druckdifferenz über eine pneumatische Druckerzeugungseinrichtung beaufschlagten Vereinzelungsöffnungen, an denen sich die zu vereinzelnenden auszubringenden Saatkörner anlagern, wobei dem Vereinzelungselement zumindest ein in unmittelbarer Nähe zu den Vereinzelungsöffnungen verstellbar angeordnetes Abstreiferelement angeordnet ist, ist vorgesehen, dass dem verstellbaren Abstreiferelement ein motorisches Stellelement zugeordnet ist, dass das motorische Stellelement mittels einer Datenübertragungsvorrichtung, insbesondere Datenleitung, ebenfalls mit dem elektronischen Bordrechner verbunden ist, dass in zumindest einem Speicher des Bordrechners Daten zur Einstellung des zumindest einen Abstreiferelementes eingespeichert und/oder hinterlegt sind und entsprechend das motorische Stellelement des Abstreiferelementes zu dessen Einstellung betätigbar ist.

Infolge dieser Maßnahmen wird entsprechend den Ausbringbedingungen angepassten Situationen eine Einstellung des Abstreiferelementes vorgenommen, so dass zu viel an den mit einer Druckdifferenz beaufschlagten Vereinzelungsöffnungen anhaftende Samenkörner abgestreift werden, so dass immer nur ein auszubringende Samenkorn an den mit einer Druckdifferenz beaufschlagten Vereinzelungsöffnungen zur Ablage im Boden anhaftet.

Eine automatische Einstellung der Durchtrittgröße der Durchtrittsöffnung und der Abstreifer Einstellung wird dadurch erreicht, dass die Daten zur Einstellung der Schieberstellung des Schieberelementes und zur Einstellung des Abstreiferelemente miteinander verknüpft sind, und dass entsprechend der eingespeicherten und/oder hinterlegten Daten über die jeweils zugeordneten motorischen Einstellelemente des Schieberelementes und des Abstreiferelemente diese in entsprechender Weise zum entsprechenden Zeitpunkt betätigbar sind.

Um entsprechende Vorgaben zur Einstellung des erfindungsgemäßen Dosiersystem in dem Bordrechner eingeben zu können, ist vorgesehen, dass der Bordrechner zumindest eine Eingabevorrichtung aufweist, dass mittels dieser Eingabevorrichtung die Saatgutart, die gewünschte Ausbringmenge, insbesondere die Anzahl pro Flächeneinheit oder zurückgelegte Wegstrecke auszubringenden Saatkörner, eine entsprechende, insbesondere die erwartete und/oder tatsächliche Hangneigung des zu bestellenden Feldes eine mittlere Hangneigung von Hand über die Eingabevorrichtung und/oder über ein Sensor zur Ermittlung der Hangneigung eingebbar ist und/oder über eine Datenleitung übermittelbar und/oder übertragbar ist.

Um das Dosiersystem optimiert einstellen zu können, damit eine von der Hangneigung unabhängige gleichmäßige Vereinzelungsqualität durch das Dosiersystem gesichert ist, ist vorgesehen, dass dem Dosiersystem zumindest ein Sensor zur Ermittlung der Hangneigung zugeordnet ist, dass die von dem Sensor zur Ermittlung der Hangneigung ermittelten Daten der Hangneigung über eine Datenleitung dem Bordrechner übermittelbar sind und dass der Bordrechner dazu eingerichtet ist, anhand der übermittelten Daten der Hangneigung die Stellelemente der Schieberelementes und/oder des Abstreiferelemente entsprechend zu betätigen.

Bei einem ersten Einsatzfall ist vorgesehen, dass bei Fahrt quer zum Hang, wenn sich die Saatgutdurchtrittsöffnung in der Trennwand der Vereinzelungsvorrichtung in Bezug auf die Vereinzelungsvorrichtung auf der Hang aufwärts gerichteten Seite befindet, so dass sich der Saatgutvorratsraum auf der Hang aufwärts gerichteten Seite zu der Vereinzelungsvorrichtung befindet, über den Bordrechner durch entsprechende Ansteuerung des Stellelementes des Schiebers die Durchtrittgröße der Saatgutdurchtrittsöffnung kleiner eingestellt wird als, wenn sich die Saatgutdurchtrittsöffnung in der Trennwand in Bezug auf die Vereinzelungsvorrichtung auf der Hang abwärts gerichteten Seite befindet, so dass sich der Saatgutvorratsraum auf der Hang abwärts gerichteten Seite zu der Vereinzelungsvorrichtung befindet.

Bei einem weiteren Einsatzfall ist vorgesehen, dass bei Fahrt quer zum Hang, wenn sich die Saatgutdurchtrittsöffnung in der Trennwand der Vereinzelungsvorrichtung in Bezug auf die Vereinzelungsvorrichtung auf der Hang abwärts gerichteten Seite befindet, so dass sich der Saatgutvorratsraum auf der Hang abwärts gerichteten Seite zu der Vereinzelungsvorrichtung befindet, über den Bordrechner durch entsprechende Ansteuerung des Stellelementes des Schiebers die Durchtrittgröße der Saatgutdurchtrittsöffnung größer eingestellt wird als, wenn sich die Saatgutdurchtrittsöffnung in der Trennwand in Bezug auf die Vereinzelungsvorrichtung auf der Hang aufwärts gerichteten Seite befindet so dass sich der Saatgutvorratsraum auf der Hang aufwärts gerichteten Seite zu der Vereinzelungsvorrichtung befindet.

Eine weitere Verbesserung der Einstellung des erfindungsgemäßen Dosiersystem kann dadurch erreicht werden, dass über dem Bordrechner durch entsprechende Ansteuerung des Stellelementes des Schiebers die Durchtrittgröße der Durchtrittsöffnung in der Trennwand bei einer Ausbringfahrt in der Ebene in einer Zwischengröße gegenüber den Einstellungen bei einer Fahrt quer zum Hang, wenn sich die Durchtrittsöffnung in der Trennwand in Bezug auf die Vereinzelungsvorrichtung auf der Hang abwärts gerichteten Seite befindet, so dass sich der Saatgutvorratsraum auf der Hang abwärts gerichteten Seite befindet, oder wenn sich die Durchtrittsöffnung in Bezug auf die Vereinzelungsvorrichtung auf der Hang aufwärts gerichteten Seite befindet, so dass sich der Saatgutvorratsraum auf der Hang aufwärts gerichteten Seite befindet, eingestellt wird.

Bei einem anderen Einsatzfall ist vorgesehen, dass bei Fahrt abwärts zum Hang, über den Bordrechner durch entsprechende Ansteuerung des Stellelementes des Schiebers die Durchtrittgröße der Durchtrittsöffnung in der Trennwand kleiner eingestellt wird als, wenn sich die landwirtschaftliche maschine auf einer zumindest annähernd horizontalen Fläche vorwärts bewegt, und dass bei Fahrt aufwärts zum Hang, über den Bordrechner durch entsprechende Ansteuerung des Stellelementes des Schiebers die Durchtrittgröße der Durchtrittsöffnung größer eingestellt wird als, wenn sich die landwirtschaftliche Maschine auf einer zumindest annähernd horizontalen Fläche vorwärts bewegt.

Um den Füllstand des Raumes zwischen der Trennwand und der Vereinzelungsseite der Vereinzelungsvorrichtung in einfacher Weise ermitteln und überwachen zu können, damit der tatsächliche Füllstand in einfacher Weise erfassbar und somit hieran angepasst die Durchtrittgröße der Durchtrittsöffnung einzustellen und entsprechend anzupassen ist, ist vorgesehen, dass ein Sensor zur Ermittlung des Saatgutgutfüllstandes in dem Raum zwischen der Trennwand und der Vereinzelungsseite der Vereinzelungsvorrichtung angeordnet ist, dass der Sensor Daten über diesen Saatgutgutfüllstand den Bordrechner übermittelt und entsprechend dieser Daten das motorische Stellelement zur Einstellung der Durchtrittsgröße der Saatgutdurchtrittsöffnung in der Trennwand entsprechend angesteuert wird.

Bei einer als Einzelkornsämaschine ausgebildeten landwirtschaftliche Maschine, die aus zumindest zwei an einem Mittelteil um jeweils eine in Fahrtrichtung verlaufende Achse um zumindest annähernd um 90° mittels eines motorischen Klappsystems aus einer Arbeitsstellung in eine Transportstellung einklappbare Seitenrahmen mit daran geordneten Dosiersystemen besteht, ist vorgesehen, dass dem motorischen Klappsystem Mittel zum Erkennen des Klappvorganges und/oder der Einleitung des Klappvorganges zugeordnet sind, welche vor oder zu Beginn des Einklappvorganges der Seitenrahmen mit den daran angeordneten Dosiersystemen in die Transportstellung Signale an das motorische Stellelement des Schiebers senden, damit der jeweilige Schieber in eine die Saatgutdurchtrittsöffnung in der Trennwand verschließende Stellung verbracht wird. Hierdurch wird erreicht bzw. sichergestellt, dass beim Einklappen der Seitenrahmen in Transportstellung und sich in Transportstellung befindlichen Dosiersystemen von Einzelkornsäaggregaten keine zusätzlichen Saatkörner durch die durch das Schieberelement verschlossene Saatgutdurchtrittsöffnung in der Trennwand in den Saatgutvorratsraum unmittelbar an der Vereinzelungsscheibe gelangen können. Somit ist das jeweilige Dosiersystem des Einzelkornsäaggregates sofort nach dem Verbringen in die Arbeitsposition wieder einsatzbereit.

Die Mittel zum Erkennen des Klappvorganges und/oder der Einleitung des Klappvorganges sind in einer bevorzugten Ausgestaltung als Winkelsensoren ausgebildet.

Weitere Einzelheiten der Erfindung sind der Beispielsbeschreibung und den Zeichnungen zu entnehmen. Die Zeichnungen zeigen
- Fig.1: ein Einzelkornsäaggregat einer als landwirtschaftlichen Maschine mit einem Dosiersystem in Seitenansicht und in vereinfachter Darstellung,
- Fig.2: das Vereinzelungsgehäuse des Dosiersystems des Einzelkornsäaggretes nach Fig.1 mit dem abgenommenen den Vereinzelungsraum verschließendem Verschlussdeckel, wobei der Schieber die einer zwischen dem Vorratsbehälter und dem Saatgutvorratsraum angeordneten Trennwand sich befindlichen Durchtrittsöffnung völlig freigibt, in der Ansicht II - II und in einem größerem Maßstab,
- Fig.3: das Einzelkornsäaggregat in der Ansicht III **-** III mit der Einstellung des Schiebers für die völlige Freigabe der Durchtrittsöffnung nach Fig.2,
- Fig.4: das Vereinzelungsgehäuse des Dosiersystems in ausschnittsweiser Darstellung nach Fig.3, jedoch in vergrößertem Maßstab,
- Fig.5: das Vereinzelungsgehäuse des Dosiersystems des Einzelkornsäaggretes nach Fig.1 mit dem abgenommenen den Vereinzelungsraum verschließendem Verschlussdeckel, wobei der Schieber die einer zwischen dem Vorratsbehälter und dem Saatgutvorratsraum angeordneten Trennwand sich befindlichen Durchtrittsöffnung teilweise freigibt, in der Ansicht gemäß Fig.2 und in einem größerem Maßstab,
- Fig.6: das Einzelkornsäaggregat in der Ansicht gemäß Fig.3 mit der Einstellung des Schiebers für die völlige Freigabe der Durchtrittsöffnung nach Fig.5,
- Fig.7: das Vereinzelungsgehäuse des Dosiersystems in ausschnittsweiser Darstellung nach Fig.6, jedoch in vergrößertem Maßstab,
- Fig.8: das Vereinzelungsgehäuse des Dosiersystems des Einzelkornsäaggretes nach Fig.1 mit dem abgenommenen den Vereinzelungsraum verschließendem Verschlussdeckel, wobei der Schieber die einer zwischen dem Vorratsbehälter und dem Saatgutvorratsraum angeordneten Trennwand sich befindlichen Durchtrittsöffnung vollständig verschließt, in der Ansicht gemäß Fig.2 und in einem größerem Maßstab,
- Fig.9: das Einzelkornsäaggregat in der Ansicht gemäß Fig.8 mit der Einstellung des Schiebers für den völligen Verschluß der Durchtrittsöffnung nach Fig.8,
- Fig.10: das Vereinzelungsgehäuse des Dosiersystems in ausschnittsweiser Darstellung nach Fig.9, jedoch in vergrößertem Maßstab,
- Fig.11: das Einzelkornsäaggregat in der Darstellungsweise nach Fig.3 mit der Einstellung des Schiebers für die völlige Freigabe der Durchtrittsöffnung nach Fig.2, jedoch bei einem Einsatz bei Fahrt quer zum Hang, wenn sich die Durchtrittsöffnung in Bezug auf die Vereinzelungsvorrichtung sich auf der Hang aufwärts gerichteten Seite befindet,
- Fig.12: das Vereinzelungsgehäuse des Dosiersystems in ausschnittsweiser Darstellung nach Fig.11, jedoch in vergrößertem Maßstab,

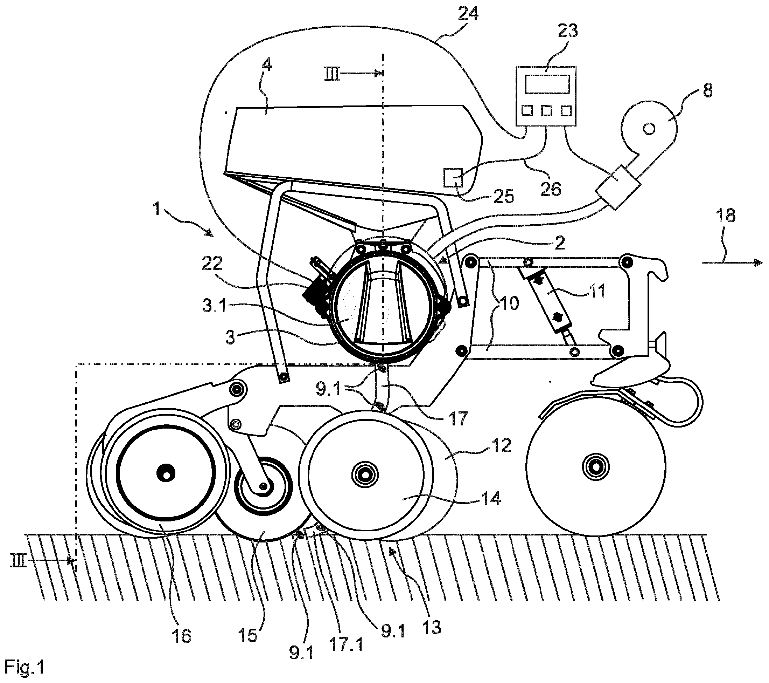

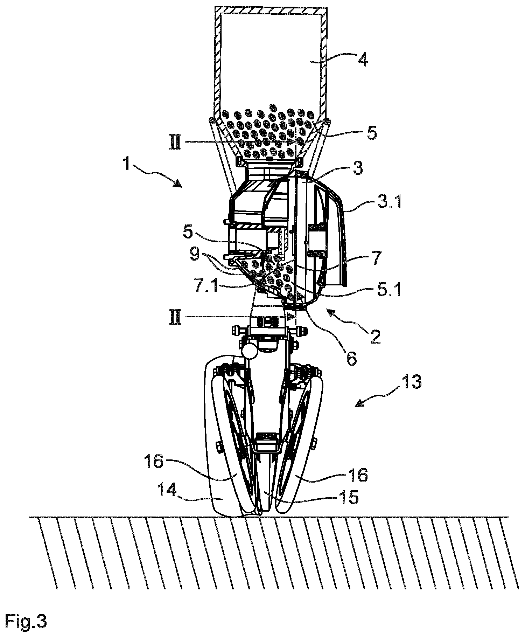

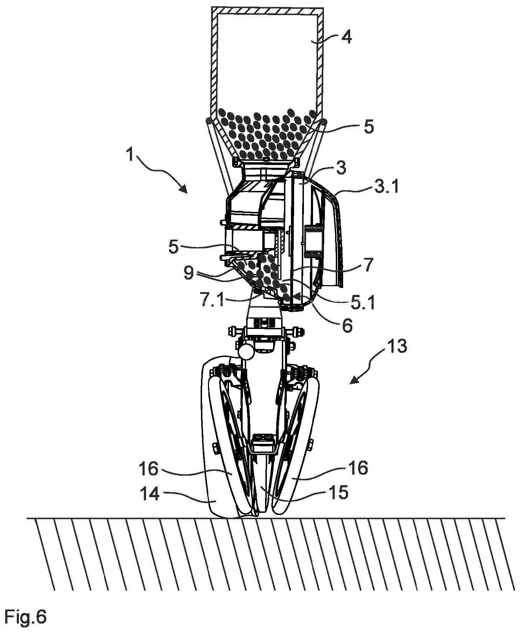

- Fig.1: 3 das Einzelkornsäaggregat in der Darstellungsweise nach Fig.3 mit der Einstellung des Schiebers für die teilweise Freigabe der Durchtrittsöffnung nach Fig.6, jedoch bei einem Einsatz bei Fahrt quer zum Hang, wenn sich die Durchtrittsöffnung in Bezug auf die Vereinzelungsvorrichtung sich auf der Hang aufwärts gerichteten Seite befindet,

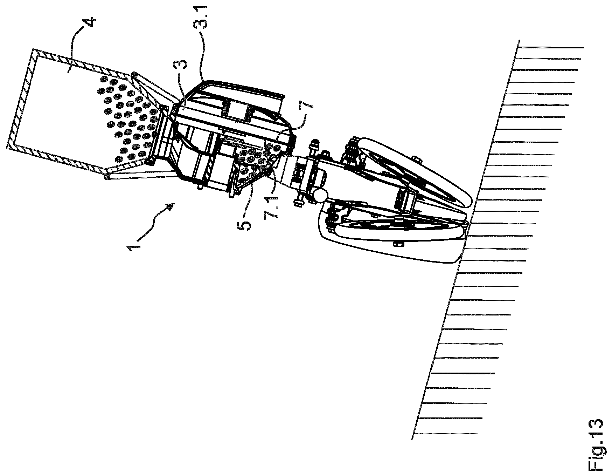

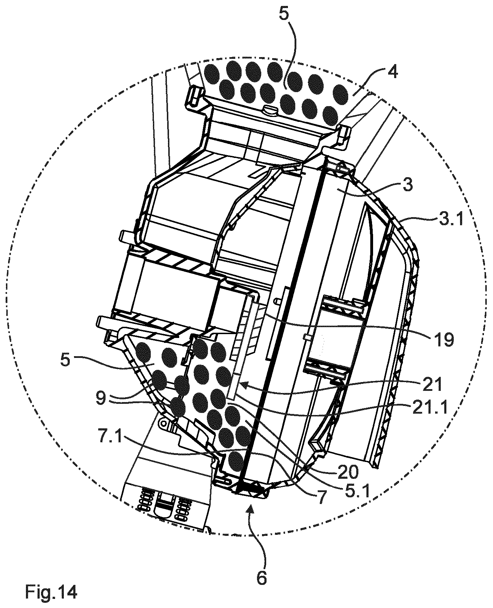

- Fig.14: das Vereinzelungsgehäuse des Dosiersystems in ausschnittsweiser Darstellung nach Fig.13, jedoch in vergrößertem Maßstab,

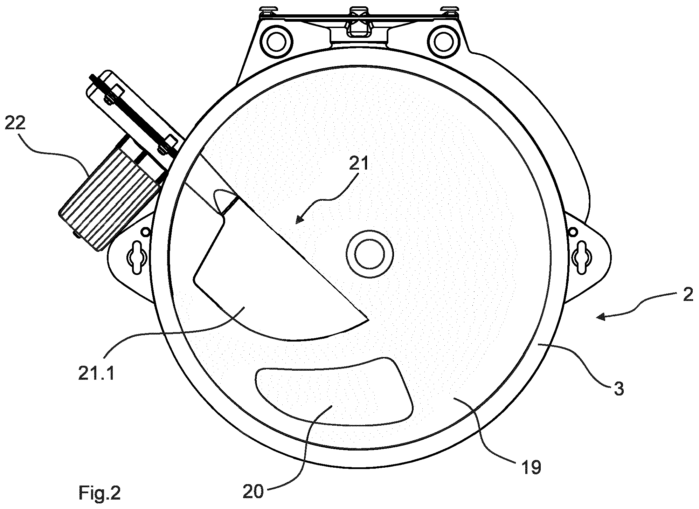

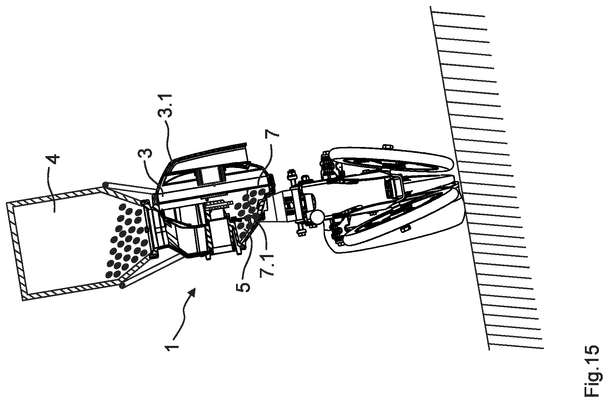

- Fig.15: das Einzelkornsäaggregat in der Darstellungsweise nach Fig.3 mit der Einstellung des Schiebers für die völlige Freigabe der Durchtrittsöffnung nach Fig.2, jedoch bei einem Einsatz bei Fahrt quer zum Hang, wenn sich die Durchtrittsöffnung in Bezug auf die Vereinzelungsvorrichtung sich auf der Hang abwärts gerichteten Seite befindet,

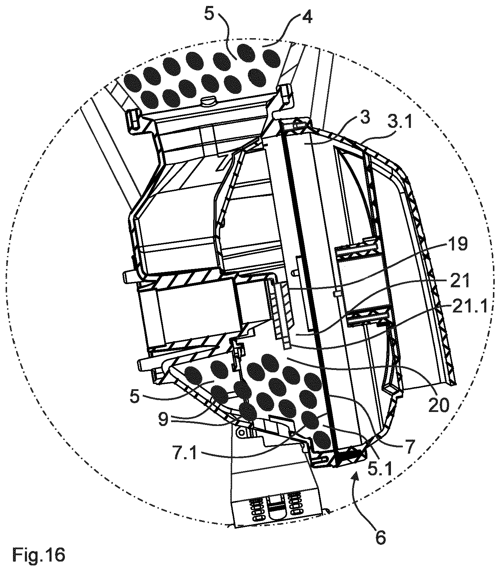

- Fig.16: das Vereinzelungsgehäuse des Dosiersystems in ausschnittsweiser Darstellung nach Fig.15, jedoch in vergrößertem Maßstab,

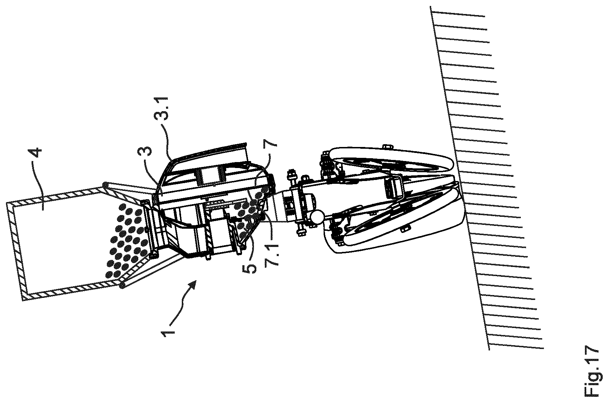

- Fig.17: das Einzelkornsäaggregat in der Darstellungsweise nach Fig.3 mit der Einstellung des Schiebers für die teilweise Freigabe der Durchtrittsöffnung nach Fig.6, jedoch bei einem Einsatz bei Fahrt quer zum Hang, wenn sich die Durchtrittsöffnung in Bezug auf die Vereinzelungsvorrichtung sich auf der Hang abwärts gerichteten Seite befindet,

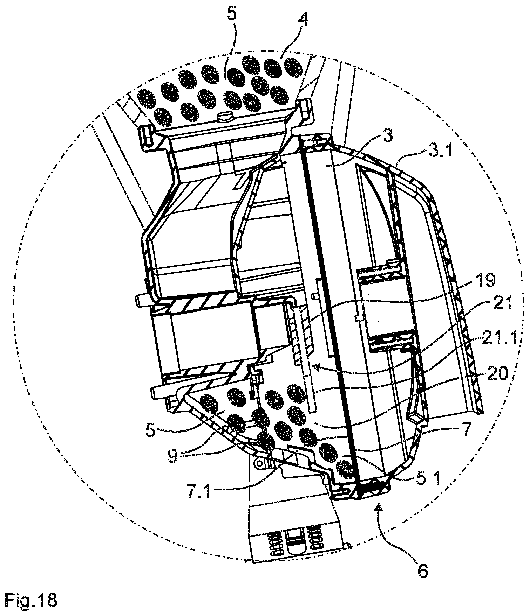

- Fig.18: das Vereinzelungsgehäuse des Dosiersystems in ausschnittsweiser Darstellung nach Fig.17, jedoch in vergrößertem Maßstab,
- Fig.1: 9 das Einzelkornsäaggregat in der Darstellungsweise nach Fig.1 jedoch bei einem Einsatz bei einer Abwärtsfahrt am Hang,

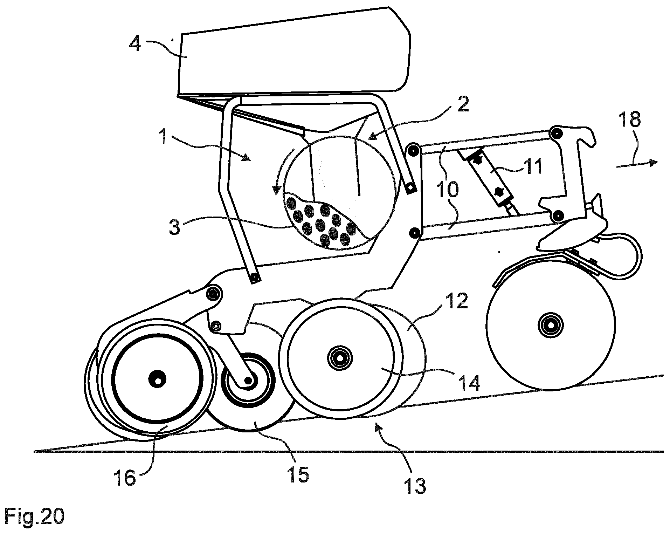

- Fig.20: das Einzelkornsäaggregat in der Darstellungsweise nach Fig.1 jedoch bei einem Einsatz bei einer Abwärtsfahrt am Hang,

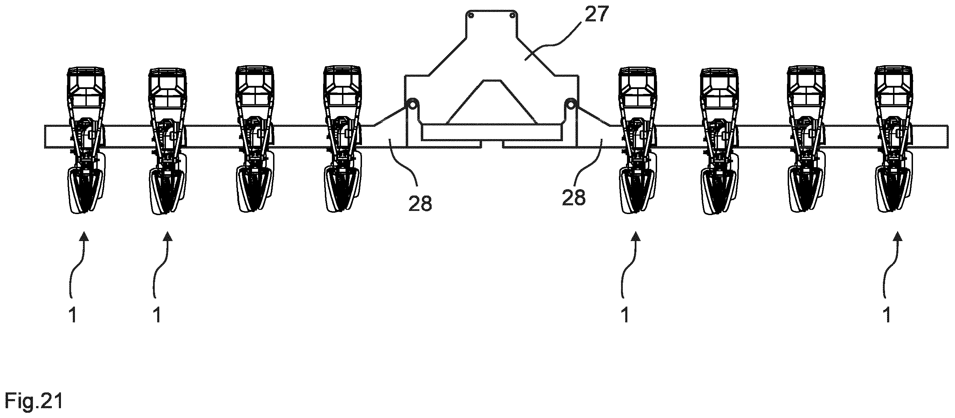

- Fig.21: die als Einzelkornsämaschine ausgebildete landwirtschaftliche Maschine in der Ansicht von hinten in Arbeitsstellung,

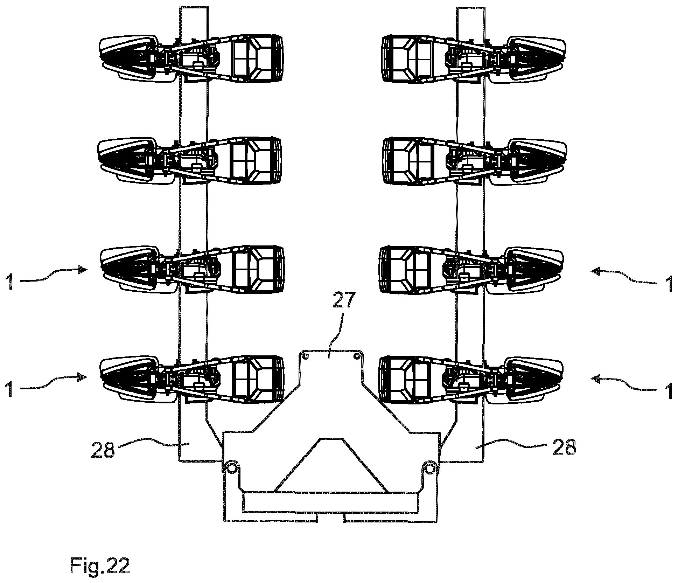

- Fig.22: die als Einzelkornsämaschine ausgebildete landwirtschaftliche Maschine in der Ansicht von hinten in Transportstellung,

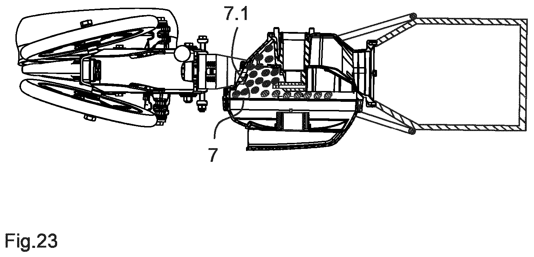

- Fig.23: das Vereinzelungsgehäuse des Dosiersystems in ausschnittsweiser Darstellung bei sich in Transportstellung befindliche Maschine nach Fig.22, jedoch in vergrößertem Maßstab, wobei der Schieber die Durchtrittsöffnung nicht verschließt,

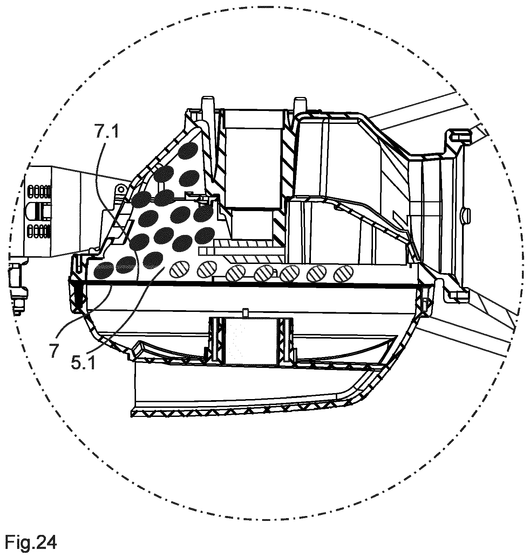

- Fig.24: das Vereinzelungsgehäuse des Dosiersystems in ausschnittsweiser Darstellung nach Fig.23, jedoch in vergrößertem Maßstab,

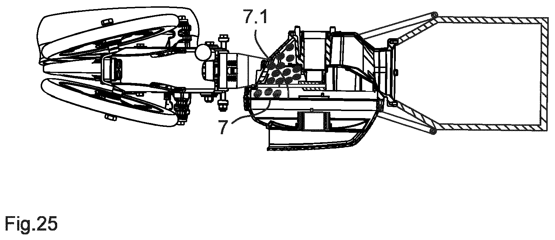

- Fig.25: das Vereinzelungsgehäuse des Dosiersystems in ausschnittsweiser Darstellung bei sich in Transportstellung befindliche Maschine nach Fig.21, jedoch in vergrößertem Maßstab, wobei der Schieber die Durchtrittsöffnung verschließt und

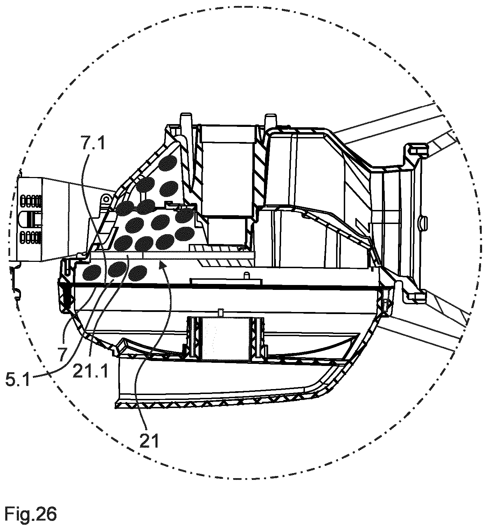

- Fig.26: das Vereinzelungsgehäuse des Dosiersystems in ausschnittsweiser Darstellung nach Fig.25, jedoch in vergrößertem Maßstab.

Eine als Einzelkornsämaschine ausgebildete landwirtschaftliche Maschine weist in nicht dargestellter Weise mehrere an einem sich quer zur Fahrtrichtung ersteckendem nicht dargestellten Traggestell beabstandet zueinander angeordnete Einzelkornsäaggregate 1 auf. Die Einzelkornsäaggregate 1 weisen ein Dosiersystem 2 mit einem Vereinzelungsgehäuse 3 auf. Oberhalb des Vereinzelungsgehäuses 3 ist ein Vorratsbehälter 4 zur Aufnahme eines Saatgutvorrates 5 angeordnet. In dem Vereinzelungsgehäuse 3, das einen abnehmbaren Deckel 3.1 aufweist, ist eine bekannte Vereinzelungsvorrichtung 6 des Dosiersystems 2 angeordnet. Diese bekannte Vereinzelungsvorrichtung 6 weist eine rotierend angetriebene Vereinzelungsscheibe 7 mit bekannten Vereinzelungsöffnungen auf, die über ein zumindest ein Gebläse 8 aufweisendes Drucksystem mit einer Druckdifferenz beaufschlagten werden, damit sich an den Vereinzelungsöffnungen bei deren Durchgang durch einen Saatgutvorrat 5 sich Samenkörner 9 aus dem Saatgutvorrat 5 anlagern, auf. Das Vereinzelungsgehäuse 3 ist durch einen abnehmbaren Verschlussdeckel 3.1 verschlossen, so dass die dem Vereinzelungsgehäuse 3 herausnehmbar angeordnete Vereinzelungsscheibe 7 gewartet und ausgewechselt werden kann.

Das Drucksystem zur Erzeugung einer Druckdifferenz an den Vereinzelungsöffnungen der Vereinzelungsscheibe 7 kann, wie allgemein bekannt ist, als Unterdruck - oder Überdrucksystem ausgebildet sein.

Das jeweilige Einzelkornsäaggregat 1 ist über eine Parallelogrammlenkeranordnung 10 an einem nicht dargestellten Querbalken eines Traggestells in aufrechter Ebene bewegbar angeordnet ist. Der Parallelogrammlenkeranordnung 10 ist ein mechanisches oder hydraulisches Feder- und/oder Aushubelement 11 zugeordnet. Weiterhin weist das Einzelkornsäaggregat 1 die als Doppelscheibenschar 12 ausgebildete Schareinheit 13 mit Tiefenführungsrollen 14 und einer nachgeordneten Fangrolle 15 und Saatgutandruckrollen 16 in bekannter Weise auf. Von der Vereinzelungseinrichtung 5 in dem Vereinzelungsgehäuse 3 führt eine Saatleitung 17 zu der Schareinheit 13. Das Ende 17.1 der Saatleitung 17 ist entgegen der Fahrtrichtung 18 ausgerichtet. Wie in Fig.1 schematisch dargestellt ist, werden die von der Vereinzelungseinrichtung 5 vereinzelten Saatkörner 9.1 über die Saatleitung 17 zu deren Ende 17.1 geführt und von der Fangrolle 15 aufgefangen und in die von der Schareinheit 13 geschaffenen Saatfurche abgelegt. Ein Schließen der Saatfurche und das Bedecken der in der Saatfurche abgelegten Samenkörner 9 und deren Andrücken erfolgt in bekannter Weise durch die nachgeordneten Andrückrollen 16. Das Führen der Saatkörner 9.1 in der Saatleitung 17 wird durch einen in der Saatleitung eingeleiteten Druckluftstrom unterstützt, der die vereinzelten Saatkörner 9.1 in Richtung des Endes 17.1 der Saatleitung 17 beschleunigt.

Auf der Vereinzelungsseite 7.1 der als Vereinzelungsscheibe 7 ausgebildeten Vereinzelungsvorrichtung 5 im Verteilergehäuse 3 befindet sich ein zugeordneter Saatgutvorratsraum 5.1, der unmittelbar mit dem Vorratsbehälter 4 verbunden ist. Dieser Saatgutvorratsraum 5.1 ist mit dem Vorratsbehälter 4 verbunden, so dass die sich in dem Vorratsbehälter 4 befindlichen Samenkörner 9 in diesen gelangen. Zwischen dem Vorratsbehälter 3 und dem Saatgutvorratsraum 5.1 ist eine Trennwand 19 angeordnet. In der Trennwand 19 ist im Ausführungsbeispiel eine Saatgutdurchtrittsöffnung 20 angeordnet, durch welche die Samenkörner 9 aus dem Vorratsbehälter 4 in den Saatgutvorratsraum 5.1 zu der Vereinzelungsseite 6.1 der Vereinzelungsscheibe 6 gelangen. Der Durchtrittsöffnung 20 ist ein als Schieber 21 ausgebildetes verstellbares Schieberelement 21.1 zur Einstellung der Öffnungsweite der Durchtrittsöffnung 20 zugeordnet. Dem Schieberelement 21.1 ist ein motorisches Einstellelement 22 zugeordnet. Mittels dieses motorischen Einstellelementes 22 ist somit die Öffnungsweite der Durchtrittsöffnung 20 einstellbar.

Drei exemplarische Einstellungen des Schiebers 21 zur Einstellung der Durchtrittgröße der Durchtrittsöffnung 20 sollen anhand einiger Zeichnungen zum leichteren Verständnis im Folgenden kurz erwähnt werden:

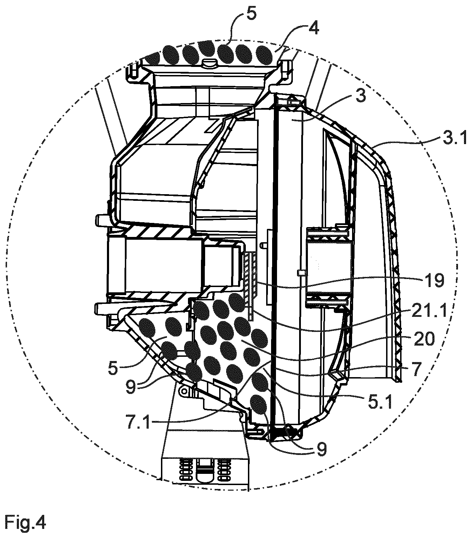

In den Fig.2 bis 4 ist der Schieber 21 so eingestellt, dass die gesamte Durchtrittsöffnung 20 frei gegeben ist.

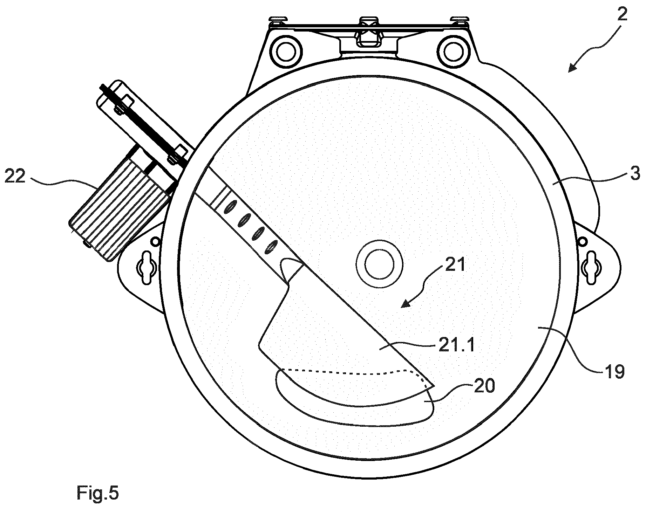

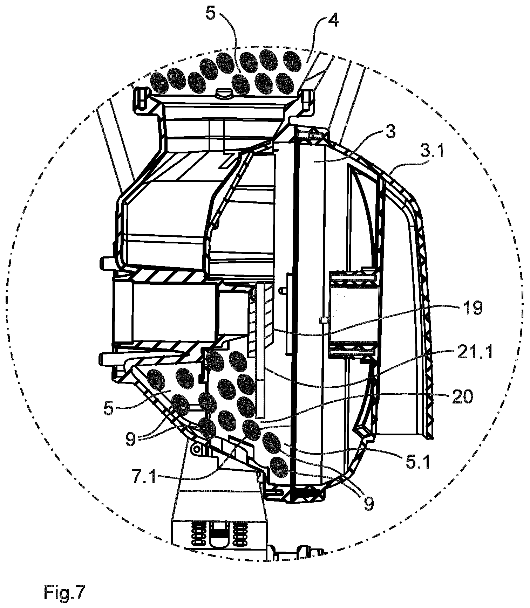

In den Fig.5 bis 7 ist der Schieber 21 so eingestellt, dass die Durchtrittgröße der Durchtrittsöffnung 20 ungefähr die Hälfte der Durchtrittgröße der Durchtrittsöffnung 20 freigegeben ist.

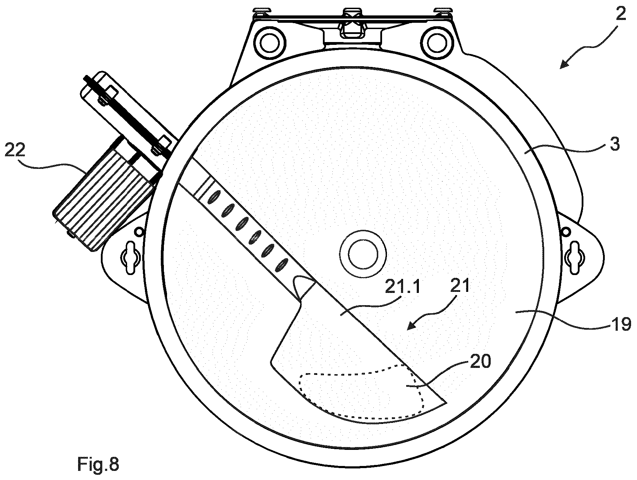

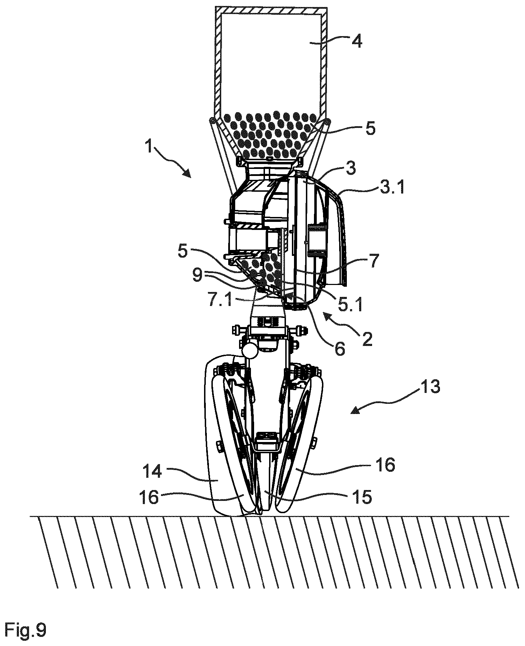

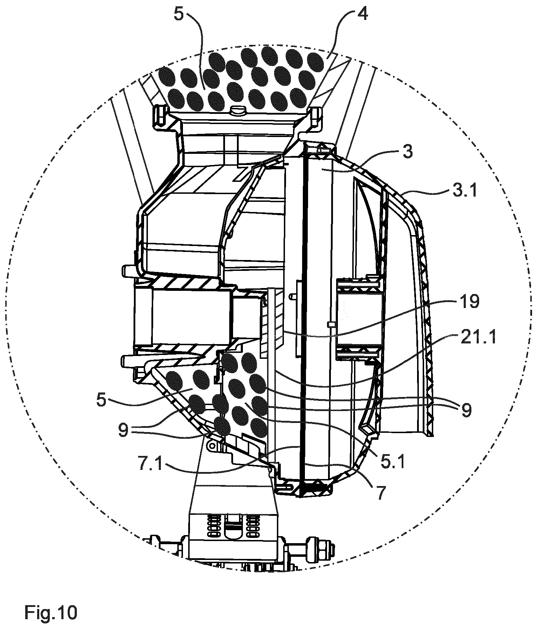

**In** den Fig.8 bis 10 ist der Schieber 21 so eingestellt, dass die Durchtrittsöffnung 20 völlig verschlossen ist.

Selbstverständlich können auch Zwischenstellungen der Durchtrittgröße für die Durchtrittsöffnung 20 je nach Einsatzfall und Einsatzbedingungen mittels des Schiebers 21 eingestellt werden.

Der Einzelkornsämaschine ist ein Bordrechner 23 zugeordnet. Das motorische Stellelement 22 ist mittels einer im Ausführungsbeispiel als Datenleitung 24 ausgebildeten Datenübertragungsvorrichtung mit dem elektronischen Bordrechner 23 verbunden. Der Bordrechner 23 weist zu mindestens einen Speicher auf. **In** dem zumindest einen Speicher des Bordrechners 23 sind Daten zur Einstellung der von der Schieberstellung der Schieber 21 bestimmten Durchtrittgröße der Durchtrittsöffnung 20 eingespeichert und/oder hinterlegt. Entsprechend der hinterlegten Daten zur Einstellung der Schiebereinstellung der Schieber 21 ist das motorische Stellelement 22 zur Einstellung der Durchtrittgröße der Durchtrittsöffnung 20 betätigbar und/oder zu betätigen. Es ist auch möglich, manuell über eine entsprechende, jedoch nicht dargestellte Betätigungseinrichtung oder über dem Bordrechner 23 durch entsprechende manuelle Eingabe das motorische Stellelement 22 des Schiebers 21 zur Einstellung der Durchtrittgröße der Durchtrittsöffnung 20 anzusteuern und zu betätigen.

Die in dem Speicher des Bordrechners 23 eingespeicherten und/oder hinterlegten Daten zur Einstellung der Durchtrittgröße der Durchtrittsöffnung 20 über den Schieber 11 sind zumindest Abhängigkeiten zwischen der von der Schieberstellung der Schieber 21 bestimmten Durchtrittgröße 20 der Durchtrittsöffnung einerseits und andererseits der Saatgutart, Ausbringmenge, Saatgutgutfüllstand in Raum zwischen der Trennwand und der Vereinzelungsseite der Vereinzelungsvorrichtung und/oder Hangneigung. In zumindest einem Speicher des Bordrechners 23 sind Abhängigkeiten zwischen der von der Schieberstellung des Schieber 21 bestimmten Durchtrittgröße der Durchtrittsöffnung 20 einerseits und andererseits der Saatgutart, Ausbringmenge und/oder Hangneigung eingespeichert und/oder hinterlegt. Zumindest entsprechend einer der vorgenannten Abhängigkeiten wird das motorische Stellelement 22 von dem Bordrechner 23 zur Einstellung der Durchtrittgröße der Durchtrittsöffnung 20 betätigt, wie vorstehend bereits kurz mit Hinweis auf die Fig.2 bis 10 bereits kurz erwähnt ist und weiter unten noch näher erläutert wird.

Wie eingangs bereits beschrieben, weist die Vereinzelungseinrichtung 6 zumindest ein drehbar angetriebenenes Vereinzelungselement, welches als Vereinzelungsscheibe 7 mit Vereinzelungsöffnungen ausgebildet ist, auf. Die Vereinzelungsöffnungen der Vereinzelungsscheibe 7 werden in bekannter Weise mit einer Druckdifferenz über ein als motorisch angetriebenes Gebläse 8 ausgebildete pneumatische Druckerzeugungseinrichtung beaufschlagt. An diese mit einer Druckdifferenz beaufschlagten Vereinzelungsöffnungen der Vereinzelungsscheibe 7 lagern sich die zu vereinzelnenden, auszubringenden Saatkörner 9 bei dem Durchgang durch den Saatgutvorrat 5 an. Dem als Vereinzelungsscheibe 7 ausgebildeten Vereinzelungselement ist zumindest ein in unmittelbarer Nähe zu den Vereinzelungsöffnungen verstellbar angeordnetes Abstreiferelement, wie es allgemein bekannt und daher nicht dargestellt ist, angeordnet. Diesem verstellbaren Abstreiferelement ist ebenfalls ein nicht dargestelltes motorisches Stellelement im bekannter Weise zugeordnet ist. Auch dieses motorische Stellelement ist mittels einer nicht dargestellten Datenübertragungsvorrichtung, insbesondere Datenleitung, ebenfalls mit dem elektronischen Bordrechner 23 verbunden. In zumindest einem Speicher des Bordrechners 23 sind Daten zur Einstellung des zumindest einen Abstreiferelementes eingespeichert und/oder hinterlegt. Entsprechend ist das motorische Stellelement des Abstreiferelementes zu dessen Einstellung betätigbar, zu betätigen und/oder wird entsprechend betätigt.

Die Daten zur Einstellung der Schieberstellung des Schieberelementes 21.1 des Schieber 21 und zur Einstellung des Abstreiferelemente sind miteinander verknüpft sind, so dass entsprechend der eingespeicherten und/oder hinterlegten Daten über die jeweils zugeordneten motorischen Einstellelemente des Schieberelementes 21.1 und des Abstreiferelemente diese in entsprechender Weise zum entsprechenden Zeitpunkt betätigbar sind, zu betätigen und/oder betätigt werden.

Der Bordrechner 23 weist zumindest eine nicht näher beschriebene Eingabevorrichtung auf. Mittels dieser Eingabevorrichtung ist die Saatgutart, die gewünschte Ausbringmenge, insbesondere die Anzahl pro Flächeneinheit oder zurückgelegte Wegstrecke auszubringenden Saatkörner, eine entsprechende, insbesondere die erwartete und/oder tatsächliche Hangneigung des zu bestellenden Feldes eine mittlere Hangneigung von Hand über die Eingabevorrichtung und/oder über zumindest einen Sensor 25 zur Ermittlung der Hangneigung einzugeben und/oder kann eingegeben werden und/oder über eine Datenleitung übermittelt und/oder übertragen werden. Dieser zumindest eine Sensor 25 zur Ermittlung der Hangneigung ist entweder an dem Rahmen der Einzelkornsämaschine oder wie in Fig.1 dargestellt, an jedem einzelnen Einzelkornsäaggregat angeordnet. Im letzteren Fall sind also jedem einzelnen Einzelkornsäaggregat ein derartiger Sensor 25 zur Ermittlung der Hangneigung zugeordnet. Dieser Sensor 25 zur Ermittlung der Hangneigung ist mittels einer als Datenleitung 26 ausgebildeten Datenübertragungseinrichtung mit dem Bordrechner 23 verbunden und übermittelt so entsprechende Daten über jeweilige die Hangneigung online an den Bordrechner 23. Es ist auch möglich, in dem Speicher des Bordrechners 23 eine Feldkarte zu hinterlegen, in welcher standortspezifisch die jeweilige Hangneigung hinterlegt ist. Diese entsprechend hinterlegten Daten über die Hangneigung können dann standortspezifisch über dem Bordrechner 23, der mit einem nicht dargestellten GPS Empfänger zusammenarbeitet, bei der Arbeit entsprechend abgerufen werden, so dass der Bordrechner 23 dann das Stellelement 22 des Schieber 21 zur Einstellung der Durchtrittgröße der Durchtrittsöffnung 20 in der Trennwand entsprechend ansteuert und diese entsprechend einstellt, wie weiter unten noch näher erläutert wird.

Wie vor erläutert, wird durch die Anordnung des Sensors 25 zur Ermittlung der Hangneigung die jeweils aktuelle Neigung des Dosiersystems 2 bei der Arbeit ermittelt und an den Bordrechner 23 übermittelt. Die von dem Sensor 25 zur Ermittlung der Hangneigung ermittelten Daten der Hangneigung sind über eine Datenleitung 26 dem Bordrechner 23 übermittelbar und/oder werden über dieser übermittelt, so dass anhand der übermittelten Daten der Hangneigung die Stellelemente 22 des jeweiligen Schieberelementes 21.1 des Schiebers 21 und/oder des jeweiligen Abstreiferelementes von dem Bordrechner 23 entsprechend betätigt werden.

Im Folgenden werden verschiedene Situationen des Einsatzes der Einzelkornsämaschine bei dem Einsatz der Einzelkornsämaschine am Hang beschrieben.

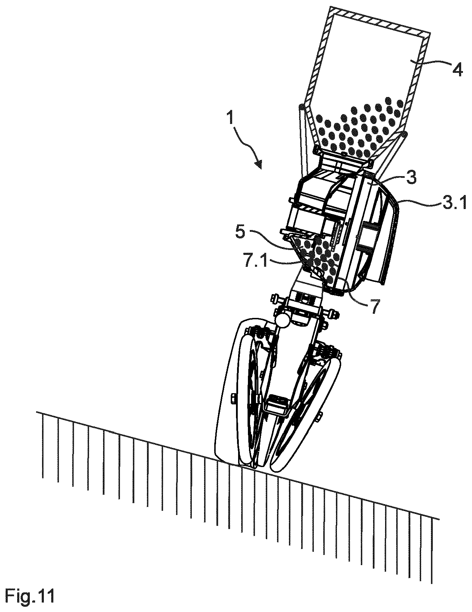

Bei der ersten im Folgenden beschriebenen Situation gemäß den Fig. 11 bis 14 handelt es sich jeweils um die Fahrt quer zum Hang, wenn sich die Saatgutdurchtrittsöffnung 20 in der Trennwand 19 in Bezug auf die Vereinzelungsseite 7.1 der Vereinzelungsscheibe 7 der Vereinzelungsvorrichtung auf der Hang aufwärts gerichteten Seite befindet. Somit befindet sich hier der Saatgutvorratsraum 5.1 auf der Hang aufwärts gerichteten Seite zu der Vereinzelungsvorrichtung 6.

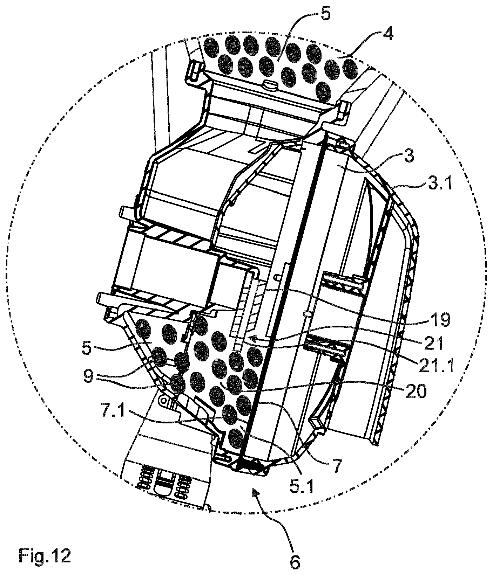

Gemäß den Darstellungen nach den Fig. 11 bis 12 befindet sich das Schieberelement 21.1 des Schiebers 21 in einer Stellung, in der die Saatgutdurchtrittsöffnung 20 von dem Schieberelement 21.1 völlig freigegeben ist. Aufgrund der vor beschriebenen Hangneigung des Einzelkornsäaggregates gelangen durch die völlige Freigabe der Saatgutdurchtrittsöffnung 20 zu viele Saatkörner 9 zu der Vereinzelungsscheibe, so dass die Aufnahme und Anhaftung der zu vereinzelnden Samenkörner 9 an den Vereinzelungsöffnungen der Vereinzelungsscheibe 7 zur Vereinzelung der Saatkörner 9 behindert wird. Um dieses zu verbessern wird über dem Bordrechner 23 das Stellelement 22 des Schieberelementes 21.1 des Schiebers 21 so eingestellt, dass die Durchtrittgröße der Saatgutdurchtrittsöffnung 20 aus der in den Fig. 11 bis 12 dargestellten größten Durchtrittgröße der Durchtrittsöffnung 20 verkleinert, so dass beispielsweise gemäß der in die in den Fig.13 bis 14 dargestellten Durchtrittgröße der Durchtrittsöffnung 20 hier nur noch eine teilweise Freigabe der Durchtrittsöffnung 20 gegeben ist. Durch die verringerte Durchtrittgröße der Durchtrittsöffnung 20 gelangen jetzt weniger Samenkörner 9 direkt in den Saatgutvorratsraum 5.1 unmittelbar zur Vereinzelungsseite 7.1 der Vereinzelungsscheibe 7, wie ein Vergleich zwischen den Fig. 12 und 14 zeigt.

Bei der zweiten im Folgenden beschriebenen Situation gemäß den Fig. 15 bis 18 handelt es sich jeweils um die Fahrt quer zum Hang, wenn sich die Saatgutdurchtrittsöffnung 20 in der Trennwand 19 in Bezug auf die Vereinzelungsseite 7.1 der Vereinzelungsscheibe 7 der Vereinzelungsvorrichtung auf der Hang abwärts gerichteten Seite befindet. Somit befindet sich hier der Saatgutvorratsraum 5.1 auf der Hang abwärts gerichteten Seite zu der Vereinzelungsvorrichtung 6.

Gemäß den Darstellungen nach den Fig. 15 bis 16 befindet sich das Schieberelement 21.1 des Schiebers 21 in einer Stellung, in der die Saatgutdurchtrittsöffnung 20 von dem Schieberelement 21.1 völlig freigegeben ist. Aufgrund der vor beschriebenen Hangneigung des Einzelkornsäaggregates gelangen hier ausreichend Saatkörner 9 zu der Vereinzelungsseite 7.1 der Vereinzelungsscheibe 7, so dass die Aufnahme und Anhaftung der zur vereinzelten Samenkörner 9 an den Vereinzelungsöffnungen der Vereinzelungsscheibe 7 zur Vereinzelung der Saatkörner 9 ausreichend ist.

Gemäß der Darstellung in den Fig. 17 bis 18 ist hier eine verkleinerte Durchtrittgröße der Durchtrittsöffnung 20 durch die entsprechende Einstellung des Schieberelementes 21.1 über den Bordcomputer 23 eingestellt, so dass hier nur noch eine teilweise Freigabe der Durchtrittsöffnung 20 gegeben ist. In dieser Situation ist kein ausreichender Saatgutvorrat im Saatgutvorratsraum 5.1 Veranlagung der Saatkörner 9 an den Vereinzelungsöffnungen der Vereinzelungsscheibe 7 auf deren Vereinzelungsseite 7.1 gegeben.

Um dieses zu verbessern, wird über den Bordrechner 23 das Stellelement 22 des Schieberelementes 21.1 des Schiebers 21 so eingestellt, dass die Durchtrittgröße der Saatgutdurchtrittsöffnung 20 aus der in den Fig. 17 bis 18 dargestellten verkleinerten Durchtrittgröße der Durchtrittsöffnung 20 vergrößert wird, so dass beispielsweise gemäß der in die in den Fig.15 bis 16 dargestellten Durchtrittgröße der Durchtrittsöffnung 20 hier eine völlige Freigabe der Durchtrittsöffnung 20 gegeben ist, damit auch in dieser Einsatzsituation ausreichend Saatkörner 9 in den Saatgutvorratsraum 5.1 zu Anlagerung der Saatkörner 9 an den Vereinzelungsöffnungen der Vereinzelungsscheibe 7 auf deren Vereinzelungsseite 7.1 gelangen.

Somit wird also durch den Bordcomputer 23 entsprechend der Hangneigung die Durchtrittsöffnung 20 in der Trennwand 19 durch die entsprechende Einstellung des Schieberelementes 21.1 entsprechend angepasst, wie vorstehend beschrieben.

Dies lässt sich im Hinblick auf die Fig. 11 bis 18 und den vorstehenden Ausführungen wie folgt umschreiben:
Bei der Fahrt quer zum Hang, wenn sich die Saatgutdurchtrittsöffnung 20 in der Trennwand 19 in Bezug auf die Vereinzelungsseite 7.1 der als Vereinzelungsscheibe 7 ausgebildeten Vereinzelungsvorrichtung 6 sich auf deren Hang aufwärts gerichteten Seite entsprechend den Einsatzverhältnissen gemäß den Fig. 11 bis 14 befindet, so dass sich der Saatgutvorratsraum 5.1 auf der Hang aufwärts gerichteten Seite zu der Vereinzelungsvorrichtung 6 befindet, wird über den Bordrechner 23 aufgrund der von dem Neigungssensor 25 übermittelten Daten der Hangneigung durch entsprechende Ansteuerung des Stellelementes des Schiebers 21 die Durchtrittgröße der Saatgutdurchtrittsöffnung 20 in der Trennwand 19 kleiner eingestellt wird (siehe die Darstellung in den Fig. 13 und 14) als, wenn sich die Saatgutdurchtrittsöffnung 20 in der Trennwand 19 in Bezug auf die als Vereinzelungsscheibe 7 ausgebildeten Vereinzelungsvorrichtung 6 sich auf der Hang abwärts gerichteten Seite (siehe die Darstellung in den Fig. 15 und 16) befindet, so dass sich der Saatgutvorratsraum 5.1 auf der Hang abwärts gerichteten Seite zu der als Vereinzelungsscheibe 7 ausgebildeten Vereinzelungsvorrichtung 6 befindet.

Bei der Fahrt quer zum Hang, wenn sich die Saatgutdurchtrittsöffnung in der Trennwand 20 der Vereinzelungsvorrichtung 6 in Bezug auf die Vereinzelungsseite 7.1 der als Vereinzelungsscheibe 7 ausgebildeten Vereinzelungsvorrichtung 6 auf der Hang abwärts gerichteten Seite entsprechend den Einsatzverhältnissen gemäß den Fig. 15 bis 18 befindet, so dass sich der Saatgutvorratsraum 5.1 auf der Hang abwärts gerichteten Seite zu der Vereinzelungsvorrichtung 6 befindet, wird über dem Bordrechner 23 aufgrund der von dem Neigungssensoren 25 übermittelten Daten der Hangneigung durch entsprechende Ansteuerung des Stellelementes 22 des Schiebers 21 die Durchtrittgröße der Saatgutdurchtrittsöffnung 20 kleiner eingestellt wird (siehe die Darstellung in den Fig. 17 und 18) als, wenn sich die Saatgutdurchtrittsöffnung in der Trennwand 19 in Bezug auf die als Vereinzelungsscheibe 7 ausgebildeten Vereinzelungsvorrichtung 6 sich auf der Hang aufwärts gerichteten Seite (siehe die Darstellung in den Fig. 15 und 16) befindet, so dass sich der Saatgutvorratsraum 5.1 auf der Hang aufwärts gerichteten Seite zu der Vereinzelungsvorrichtung 6 befindet.

Über dem Bordrechner 23 wird durch entsprechende Ansteuerung des Stellelementes 22 des Schiebers 21 die Durchtrittgröße der Durchtrittsöffnung 20 in der Trennwand 19 bei einer Ausbringfahrt in der Ebene in einer Zwischengröße gegenüber den Einstellungen bei einer Fahrt quer zum Hang, wenn sich die Durchtrittsöffnung 20 in der Trennwand 19 in Bezug auf die als Vereinzelungsscheibe 7 ausgebildeten Vereinzelungsvorrichtung 6 sich auf der Hang abwärts gerichteten Seite befindet, so dass sich der Saatgutvorratsraum 5.1 auf der Hang abwärts gerichteten Seite befindet, oder wenn sich die Durchtrittsöffnung 20 in Bezug auf die als Vereinzelungsscheibe 7 ausgebildeten Vereinzelungsvorrichtung 6 auf der Hang abwärts gerichteten Seite befindet, so dass sich der Saatgutvorratsraum 5.1 auf der Hang abwärts gerichteten Seite befindet, eingestellt wird.

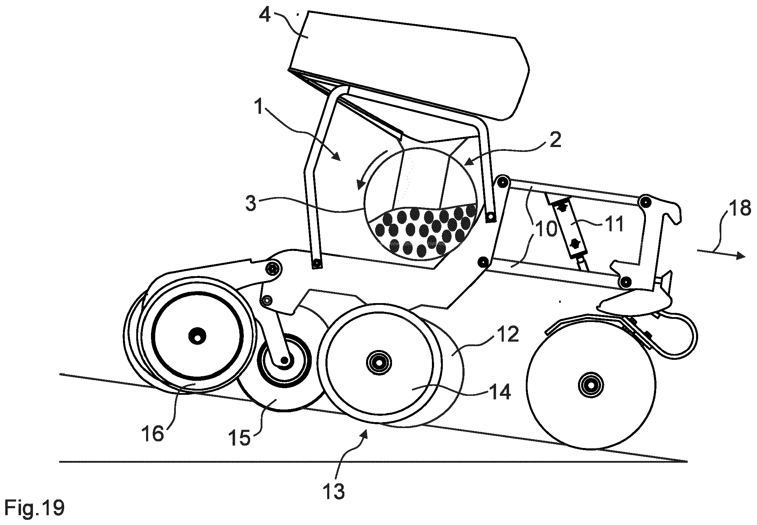

Bei der Fahrt abwärts zum Hang gemäß Fig.19 wird über den Bordrechner 23 durch entsprechende Ansteuerung des Stellelementes 22 des Schiebers 21 die Durchtrittgröße der Durchtrittsöffnung 20 in der Trennwand 19 kleiner eingestellt als wenn sich die landwirtschaftliche Maschine auf einer zumindest annähernd horizontalen Fläche vorwärts bewegt. Bei Fahrt aufwärts zum Hang gemäß Fig.20 wird über den Bordrechner 23 durch entsprechende Ansteuerung des Stellelementes 22 des Schiebers 21 die Durchtrittgröße der Durchtrittsöffnung 20 stp größer eingestellt als, wenn sich die landwirtschaftliche Maschine auf einer zumindest annähernd horizontalen Fläche vorwärts bewegt.

In nicht dargestellter Weise ist ein Sensor zur Ermittlung des Saatgutgutfüllstandes in dem Vorratsraum 5.1 zwischen der Trennwand 19 und der Vereinzelungsseite 7.1 der der als Vereinzelungsscheibe 7 ausgebildeten Vereinzelungsvorrichtung 6 angeordnet. Dieser Sensor übermittelt Daten über diesen Saatgutgutfüllstand an den Bordrechner 23**.** Entsprechend dieser Daten wird das motorische Stellelement 22 des Schieberelmentes 21 zur Einstellung der Durchtrittsgröße der Durchtrittsöffnung 20 in der Trennwand 19 entsprechend angesteuert, damit der gewünschte Saatgutvorrat zur Vereinzelung der Samenkörner an der Vereinzelungsseite 7.1 der Vereinzelungsscheibe 7 in der richtigen Größe zur Verfügung steht.

Die landwirtschaftliche Maschine entsprechend dem Ausführungsbeispiel nach den Fig. 21 und 22 besteht aus zumindest zwei an einem Mittelteil 27 um jeweils eine in Fahrtrichtung verlaufende Achse um zumindest annähernd um 90° mittels zumindest eines motorischen Klappsystems aus einer Arbeitsstellung gemäß Fig. 21 in eine Transportstellung gemäß Fig.22 einklappbare Transportstellung verschwenkbare Seitenrahmen 28 mit daran geordneten Einzelkornsäaggregaten 21 aufweisenden Dosiersystemen 2. Dem motorischen Klappsystem sind Mittel zum Erkennen des Klappvorganges und/oder der Einleitung des Klappvorganges zugeordnet. Die Mittel zum Erkennen des Klappvorganges und/oder der Einleitung des Klappvorganges sind beispielsweise als Winkelsensoren ausgebildet. Diese Winkelsensoren senden vor oder zu Beginn des Einklappvorganges der Seitenrahmen 28 mit den daran angeordneten Dosiersystemen 2 aus der Arbeitsstellung gemäß Fig.21 in die Transportstellung gemäß Fig.22 jeweils entsprechende Signale den Bordrechner 23, der wiederum jeweils an das jeweilige motorische Stellelement 22 des Schiebers 21 sendet. Durch diese entsprechenden Signale an die motorischen Stellelemente 22 der Schieberelemente 21.1 des Schiebers 21 der einzelnen Einzelkornsäagregate 1, werden die jeweiligen Schieber 21 aus der in Fig.23 und 24 dargestellten Position in eine die Durchtrittsöffnung 20 in der Trennwand 19 verschließende Stellung gemäß den Fig.25 und 26 verbracht werden.

Hierdurch erreicht bzw. sichergestellt, dass beim Einklappen der Seitenrahmen 28 in Transportstellung gemäß Fig.22 und sich in Transportstellung befindlichen Dosiersystemen 2 der Einzelkornsäaggregate1 keine zusätzlichen Saatkörner 9 durch die durch das Schieberelement 21 verschlossene Saatgutdurchtrittsöffnung 20 in der Trennwand 19 in den Saatgutvorratsraum 5.1 unmittelbar an die Vereinzelungsseite 7.1 der Vereinzelungsscheibe 9 gelangen können, wie die Fig.25 und 26 zeigen. Somit ist das jeweilige Dosiersystem 2 jedes Einzelkornsäaggregates 1 sofort nach dem Verbringen in die Arbeitsposition gemäß Fig.21 wieder einsatzbereit.

## Patentansprüche

1. Landwirtschaftliche Maschine, insbesondere Einzelkornsämaschine, umfassend ein Dosiersystem (2) mit
einem Vereinzelungsgehäuse (3),
einer in dem Vereinzelungsgehäuse (3) angeordneten Vereinzelungsvorrichtung (6, 7) des Dosiersystems (2),
einem auf der Vereinzelungsseite (7.1) der Vereinzelungsvorrichtung (6, 7) im Verteilergehäuse (3) sich befindenden zugeordneten Saatgutvorratsraum (5),
einem dem Saatgutvorratsraum (5, 5.1) des Vereinzelungsgehäuses (3) unmittelbar zugeordneten Vorratsbehälter (4),
einer zwischen dem Vorratsbehälter (4) und dem Saatgutvorratsraum (5.1) angeordneten Trennwand (19),
zumindest einer in der Trennwand (19) angeordneten Saatgutdurchtrittsöffnung (20), deren Durchtrittgröße durch zumindest ein verstellbares Schieberelement (21, 21.1) mittels zumindest eines Einstellelementes (22) einstellbar ist,
**dadurch gekennzeichnet, dass**
das zumindest eine Einstellelement (22) des verstellbaren Schieberelementes (21, 21.1) als motorisches Stellelement ausgebildet ist,
dass das motorische Stellelement (22) mittels einer Datenübertragungsvorrichtung (24), insbesondere Datenleitung, mit einem der landwirtschaftlichen Maschine zugeordneten elektronischen Bordrechner (23) verbunden ist,
dass in zumindest einem Speicher des Bordrechners (23) Daten zur Einstellung der von der Schieberstellung des Schiebers (21) bestimmten Durchtrittgröße der Durchtrittsöffnung (22) eingespeichert und/oder hinterlegt sind und
entsprechend das motorische Stellelement (22) des Schiebers (21) zur Einstellung der Durchtrittgröße der Durchtrittsöffnung (20) betätigbar ist.

2. Landwirtschaftliche Maschine nach Anspruch 1, **dadurch gekennzeichnet, dass**
die in dem Speicher des Bordrechners (23) eingespeicherten und/oder hinterlegten Daten zur Einstellung der Durchtrittgröße der Durchtrittsöffnung (20) zumindest Abhängigkeiten zwischen der von der Schieberstellung des Schiebers (21) bestimmten Durchtrittgröße der Durchtrittsöffnung (20) einerseits und andererseits der Saatgutart, Ausbringmenge, Saatgutfüllstand im Raum zwischen der Trennwand und der Vereinzelungsseite der Vereinzelungsvorrichtung und/oder Hangneigung sind.

3. Landwirtschaftliche Maschine nach zumindest einem der Ansprüche 1 oder 2, **dadurch gekennzeichnet, dass**
in zumindest einem Speicher des Bordrechners (20) Abhängigkeiten zwischen der von der Schieberstellung des Schiebers (20) bestimmten Durchtrittgröße der Durchtrittsöffnung (20) einerseits und andererseits der Saatgutart, Ausbringmenge und/oder Hangneigung eingespeichert und/oder hinterlegt sind, und
dass der Bordrechner (23) dazu eingerichtet ist, zumindest entsprechend einer der Abhängigkeiten das motorische Stellelement (22) zur Einstellung der Durchtrittgröße der Durchtrittsöffnung (20) zu betätigen.

4. Landwirtschaftliche Maschine nach zumindest einem der vorstehenden Ansprüche,
wobei die Vereinzelungseinrichtung (6) zumindest ein drehbar angetriebenenes Vereinzelungselement (7) mit mit einer Druckdifferenz über eine pneumatische Druckerzeugungseinrichtung (8) beaufschlagbaren Vereinzelungsöffnungen, an denen sich die zu vereinzelnenden auszubringenden Saatkörner (9) anlagern, aufweist,
wobei dem Vereinzelungselement (6, 7) zumindest ein in unmittelbarer Nähe zu den Vereinzelungsöffnungen verstellbar angeordnetes Abstreiferelement angeordnet ist,
**dadurch gekennzeichnet, dass**
dem verstellbaren Abstreiferelement ein motorisches Stellelement zugeordnet ist,
dass das motorische Stellelement mittels einer Datenübertragungsvorrichtung, insbesondere Datenleitung, ebenfalls mit dem elektronischen Bordrechner (23) verbunden ist,
dass in zumindest einem Speicher des Bordrechners (23) Daten zur Einstellung des zumindest einen Abstreiferelementes eingespeichert und/oder hinterlegt sind und
entsprechend das motorische Stellelement des Abstreiferelementes zu dessen Einstellung betätigbar ist.

5. Landwirtschaftliche Maschine nach zumindest einem der vorstehenden Ansprüche,
**dadurch gekennzeichnet, dass**
die Daten zur Einstellung der Schieberstellung des Schieberelementes (21, 21.1) und zur Einstellung des Abstreiferelementes miteinander verknüpft sind, und
dass entsprechend der eingespeicherten und/oder hinterlegten Daten über die jeweils zugeordneten motorischen Einstellelemente (22) des Schieberelementes (21, 21.1) und des Abstreiferelementes diese in entsprechender Weise zum entsprechenden Zeitpunkt betätigbar sind.

6. Landwirtschaftliche Maschine nach zumindest einem der vorstehenden Ansprüche,
**dadurch gekennzeichnet, dass**
der Bordrechner (23) zumindest eine Eingabevorrichtung aufweist,
dass mittels dieser Eingabevorrichtung die Saatgutart, die gewünschte Ausbringmenge, insbesondere die Anzahl pro Flächeneinheit oder zurückgelegte Wegstrecke auszubringenden Saatkörner, eine entsprechende, insbesondere die erwartete und/oder tatsächliche Hangneigung des zu bestellenden Feldes eine mittlere Hangneigung von Hand über die Eingabevorrichtung und/oder über einen Sensor (25) zur Ermittlung der Hangneigung eingebbar ist und/oder über eine Datenleitung (26) übermittelbar und/oder übertragbar ist.

7. Landwirtschaftliche Maschine nach zumindest einem der vorstehenden Ansprüche,
**dadurch gekennzeichnet, dass**
dem Dosiersystem (2) zumindest ein Sensor (25) zur Ermittlung der Hangneigung zugeordnet ist,
dass die von dem Sensor (25) zur Ermittlung der Hangneigung ermittelten Daten der Hangneigung über eine Datenleitung (26) dem Bordrechner (23) übermittelbar sind, und
dass der Bordrechner (23) dazu eingerichtet ist, anhand der übermittelten Daten der Hangneigung das Stellelement (22) des Schieberelementes (21, 21.1) und/oder des Abstreiferelementes entsprechend zu betätigen.

8. Landwirtschaftliche Maschine nach zumindest einem oder mehreren der vorstehenden Ansprüche, **dadurch gekennzeichnet, dass**
die landwirtschaftliche Maschine dazu ausgebildet ist, dass bei Fahrt quer zum Hang, wenn sich die Saatgutdurchtrittsöffnung (20) in der Trennwand (19) der Vereinzelungsvorrichtung in Bezug auf die Vereinzelungsvorrichtung (6) auf der Hang aufwärts gerichteten Seite befindet, so dass sich der Saatgutvorratsraum (5.1) auf der Hang aufwärts gerichteten Seite zu der Vereinzelungsvorrichtung (6, 7) befindet, über den Bordrechner (23) durch entsprechende Ansteuerung des Stellelementes (22) des Schiebers (21) die Durchtrittgröße der Saatgutdurchtrittsöffnung (20) kleiner eingestellt wird als, wenn sich die Saatgutdurchtrittsöffnung (20) in der Trennwand (19) in Bezug auf die Vereinzelungsvorrichtung (6, 7) auf der Hang abwärts gerichteten Seite befindet, so dass sich der Saatgutvorratsraum (5.1) auf der Hang abwärts gerichteten Seite zu der Vereinzelungsvorrichtung (6, 7) befindet.

9. Landwirtschaftliche Maschine nach zumindest einem oder mehreren der vorstehenden Ansprüche, **dadurch gekennzeichnet, dass**
die landwirtschaftliche Maschine dazu ausgebildet ist, dass bei Fahrt quer zum Hang, wenn sich die Saatgutdurchtrittsöffnung (20) in der Trennwand (19) der Vereinzelungsvorrichtung (6) in Bezug auf die Vereinzelungsvorrichtung (6, 7) auf der Hang abwärts gerichteten Seite befindet, so dass sich der Saatgutvorratsraum (5.1) auf der Hang abwärts gerichteten Seite zu der Vereinzelungsvorrichtung (6,7) befindet, über den Bordrechner (23) durch entsprechende Ansteuerung des Stellelementes (22) des Schiebers (21) die Durchtrittgröße der Saatgutdurchtrittsöffnung (20) größer eingestellt wird als, wenn sich die Saatgutdurchtrittsöffnung (20) in der Trennwand (19) in Bezug auf die Vereinzelungsvorrichtung (6,7) auf der Hang aufwärts gerichteten Seite befindet, so dass sich der Saatgutvorratsraum (5.1) auf der Hang aufwärts gerichteten Seite zu der Vereinzelungsvorrichtung (6,7) befindet.

10. Landwirtschaftliche Maschine nach zumindest einem der Ansprüche 8 oder 9, **dadurch**
**gekennzeichnet, dass**
die landwirtschaftliche Maschine dazu ausgebildet ist, dass über den Bordrechner (23) durch entsprechende Ansteuerung des Stellelementes (22) des Schiebers (21) die Durchtrittgröße der Durchtrittsöffnung (20) in der Trennwand (19) bei einer Ausbringfahrt in der Ebene in einer Zwischengröße gegenüber den Einstellungen bei einer Fahrt quer zum Hang, wenn sich die Durchtrittsöffnung (20) in der Trennwand (19) in Bezug auf die Vereinzelungsvorrichtung (6, 7) auf der Hang abwärts gerichteten Seite befindet, so dass sich der Saatgutvorratsraum (5.1) auf der Hang abwärts gerichteten Seite befindet, oder wenn sich die Durchtrittsöffnung (20) in Bezug auf die Vereinzelungsvorrichtung (6, 7) auf der Hang aufwärts gerichteten Seite befindet, so dass sich der Saatgutvorratsraum (5.1) auf der Hang aufwärts gerichteten Seite befindet, eingestellt wird.

11. Landwirtschaftliche Maschine nach zumindest einem oder mehreren der vorstehenden Ansprüche 1 bis 7, **dadurch gekennzeichnet, dass**
die landwirtschaftliche Maschine dazu ausgebildet ist, dass bei Fahrt abwärts zum Hang, über den Bordrechner (23) durch entsprechende Ansteuerung des Stellelementes (22) des Schiebers (21) die Durchtrittgröße der Durchtrittsöffnung (20) in der Trennwand (19) kleiner eingestellt wird als, wenn sich die landwirtschaftliche Maschine auf einer zumindest annähernd horizontalen Fläche vorwärts bewegt, und
dass bei Fahrt aufwärts zum Hang, über den Bordrechner (23) durch entsprechende Ansteuerung des Stellelementes (22) des Schiebers (21) die Durchtrittgröße der Durchtrittsöffnung (20) größer eingestellt wird als, wenn sich die landwirtschaftliche Maschine auf einer zumindest annähernd horizontalen Fläche vorwärts bewegt.

12. Landwirtschaftliche Maschine nach zumindest einem der vorstehenden Ansprüche, **dadurch gekennzeichnet, dass**
ein Sensor zur Ermittlung des Saatgutgutfüllstandes in dem Raum zwischen der Trennwand (19) und der Vereinzelungsseite (7.1) der Vereinzelungsvorrichtung (7) angeordnet ist,
dass der Sensor dazu ausgebildet ist, Daten über diesen Saatgutgutfüllstand an den Bordrechner (23) zu übermitteln und
entsprechend dieser Daten das motorische Stellelement (22) zur Einstellung der Durchtrittsgröße der Durchtrittsöffnung (20) in der Trennwand (19) entsprechend ansteuerbar ist.

13. Landwirtschaftliche Maschine nach zumindest einem der vorstehenden Ansprüche,
wobei die landwirtschaftliche Maschine zumindest zwei an einem Mittelteil (27) um jeweils eine in Fahrtrichtung verlaufende Achse um zumindest annähernd um 90° mittels eines motorischen Klappsystems aus einer Arbeitsstellung in eine Transportstellung einklappbare Seitenrahmen (28) mit daran geordneten Dosiersystemen (2) aufweist,
**dadurch gekennzeichnet, dass**
dem motorischen Klappsystem Mittel zum Erkennen des Klappvorganges und/oder der Einleitung des Klappvorganges zugeordnet sind, welche dazu ausgebildet sind, vor oder zu Beginn des Einklappvorganges der Seitenrahmen (28) mit den daran angeordneten Dosiersystemen (2) in die Transportstellung Signale an das motorische Stellelement (22) des Schiebers (21) zu senden, damit der jeweilige Schieber (21) in eine die Durchtrittsöffnung (20) verschließende Stellung verbracht wird.

14. Landwirtschaftliche Maschine nach Anspruch 13, **dadurch gekennzeichnet, dass**
die Mittel zum Erkennen des Klappvorganges und/oder der Einleitung des Klappvorganges als Winkelsensoren ausgebildet sind.

## Claims

1. Agricultural machine, in particular a precision seed drill, comprising a metering system (2) having
a singling housing (3),
a singling device (6, 7) of the metering system (2), which is arranged in the singling housing (3),
an associated seed storage chamber (5) located on the singling side (7.1) of the singling device (6, 7) in the distributor housing (3),
a storage container (4) directly associated with the seed storage chamber (5, 5.1) of the singling housing (3),
a partition wall (19) arranged between the storage container (4) and the seed storage chamber (5.1),
at least one seed passage opening (20) arranged in the partition wall (19), the passage size of which opening can be adjusted using at least one movable slider element (21, 21.1) by means of at least one adjusting element (22),
**characterized in that**
the at least one adjusting element (22) of the movable slider element (21, 21.1) is designed as a motorized control element,
the motorized control element (22) is connected to an electronic on-board computer (23) associated with the agricultural machine by means of a data transmission device (24), in particular a data line,
data for adjusting the passage size of the passage opening (22), which is determined by the slider position of the slider (21), are saved and/or stored in at least one memory of the on-board computer (23) and,
accordingly, the motorized control element (22) of the slider (21) can be actuated to adjust the passage size of the passage opening (20).

2. Agricultural machine according to claim 1, **characterized in that**
the data for adjusting the passage size of the passage opening (20), which are saved and/or stored in the memory of the on-board computer (23), are at least dependencies between the passage size of the passage opening (20), determined by the slider position of the slider (21), and the seed type, sowing quantity, seed level in the chamber between the partition wall and the singling side of the singling device and/or slope gradient.

3. Agricultural machine according to at least one of claims 1 or 2,
**characterized in that**
dependencies between the passage size of the passage opening (20), determined by the slider position of the slider (20), and the seed type, sowing quantity and/or slope gradient are saved and/or stored in at least one memory of the on-board computer (20), and
the on-board computer (23) is designed to actuate the motorized control element (22) to adjust the passage size of the passage opening (20), at least in accordance with one of the dependencies.

4. Agricultural machine according to at least one of the preceding claims,
the singling device (6) comprising at least one rotatably driven singling element (7) having singling openings which can be acted upon by a pressure difference generated by a pneumatic pressure-generating device (8), and at which the seeds (9) to be singled for sowing accumulate,
at least one scraping element which is movably arranged in the immediate vicinity of the singling openings being associated with the singling element (6, 7),
**characterized in that**
a motorized control element is associated with the movable scraping element,
the motorized control element is also connected to the electronic on-board computer (23) by means of a data transmission device, in particular a data line,
data for adjusting the at least one scraping element are saved and/or stored in the at least one memory of the on-board computer (23) and,
accordingly, the motorized control element of the scraping element can be actuated to adjust the scraping element.

5. Agricultural machine according to at least one of the preceding claims,
**characterized in that**
the data for adjusting the slider position of the slider element (21, 21.1) and for adjusting the scraping element are linked together, and,
in accordance with the saved and/or stored data regarding the respectively associated motorized adjusting elements (22) of the slider element (21, 21.1) and the scraping element, these adjusting elements can be actuated in an appropriate manner at an appropriate time.

6. Agricultural machine according to at least one of the preceding claims,
**characterized in that**
the on-board computer (23) has at least one input device,
by means of this input device, the seed type, the desired sowing quantity, in particular the number of seeds to be sown per unit of area or distance traveled, a relevant average slope gradient, in particular the expected and/or actual slope gradient of the field to be cultivated, can be entered manually via the input device and/or via a sensor (25) for detecting the slope gradient, and/or can be transmitted and/or transferred via a data line (26).

7. Agricultural machine according to at least one of the preceding claims,
**characterized in that**
at least one sensor (25) for detecting the slope gradient is associated with the metering system (2),
the slope gradient data detected by the sensor (25) for detecting the slope gradient can be transmitted to the on-board computer (23) via a data line (26), and
the on-board computer (23) is designed to actuate the control element (22) of the slider element (21, 21.1) and/or the scraping element accordingly on the basis of the transmitted slope gradient data.

8. Agricultural machine according to at least one or more of the preceding claims, **characterized in that**
the agricultural machine is designed such that, when traveling across the slope, when the seed passage opening (20) in the partition wall (19) of the singling device is located on the upslope side with respect to the singling device (6), so that the seed storage chamber (5.1) is located on the upslope side relative to the singling device (6, 7), the passage size of the seed passage opening (20) is adjusted by means of the on-board computer (23), by appropriate actuation of the control element (22) of the slider (21), to be smaller than when the seed passage opening (20) in the partition wall (19) is located on the downslope side with respect to the singling device (6, 7), so that the seed storage room (5.1) is located on the downslope side relative to the singling device (6, 7).

9. Agricultural machine according to at least one or more of the preceding claims, **characterized in that**
the agricultural machine is designed such that, when traveling across the slope, when the seed passage opening (20) in the partition wall (19) of the singling device (6) is located on the downslope side with respect to the singling device (6, 7), so that the seed storage chamber (5.1) is located on the downslope side relative to the singling device (6, 7), the passage size of the seed passage opening (20) is adjusted by means of the on-board computer (23), by appropriate actuation of the control element (22) of the slider (21),to be larger than when the seed passage opening (20) in the partition wall (19) is located on the upslope side with respect to the singling device (6, 7), so that the seed storage chamber (5.1) is located on the upslope side relative to the singling device (6, 7).

10. Agricultural machine according to at least one of claims 8 or 9,
**characterized in that**
the agricultural machine is designed such that the passage size of the passage opening (20) in the partition wall (19) is adjusted by means of the on-board computer (23), by appropriate actuation of the control element (22) of the slider (21), to an intermediate size when sowing on a level surface, compared to the settings for traveling across the slope when the passage opening (20) in the partition wall (19) is located on the downslope side with respect to the singling device (6, 7), so that the seed storage chamber (5.1) is located on the downslope side, or when the passage opening (20) is located on the upslope side with respect to the singling device (6, 7), so that the seed storage chamber (5.1) is located on the upslope side.

11. Agricultural machine according to at least one or more of the preceding claims 1 to 7, **characterized in that**
the agricultural machine is designed such that, when traveling down the slope, the passage size of the passage opening (20) in the partition wall (19) is adjusted by means of the on-board computer (23), by appropriate actuation of the control element (22) of the slider (21), to be smaller than when the agricultural machine is moving forward on an at least approximately horizontal surface, and
when traveling up the slope, the passage size of the passage opening (20) is adjusted by means of the on-board computer (23), by appropriate actuation of the control element (22) of the slider (21), to be larger than when the agricultural machine is moving forward on an at least approximately horizontal surface.

12. Agricultural machine according to at least one of the preceding claims,
**characterized in that**
a sensor for detecting the seed level is arranged in the chamber between the partition wall (19) and the singling side (7.1) of the singling device (7),
the sensor is designed to transmit data about this seed level to the on-board computer (23) and
the motorized control element (22) can be appropriately actuated in accordance with these data, to adjust the passage size of the passage opening (20) in the partition wall (19).

13. Agricultural machine according to at least one of the preceding claims,
the agricultural machine having at least two side frames (28) which, by means of a motorized folding system, can each be folded about an axis extending in the direction of travel by at least approximately 90° from a working position into a transport position on a central part, (27) and which have metering systems (2) arranged thereon,
**characterized in that**
means for detecting the folding process and/or for detecting initiation of the folding process are associated with the motorized folding system, which means are designed to send signals to the motorized control element (22) of the slider (21) before or at the beginning of the folding process of the side frames (28) with the metering systems (2) arranged thereon into the transport position, so that the relevant slider (21) is moved into a position where it closes the passage opening (20).

14. Agricultural machine according to claim 13, **characterized in that**
the means for detecting the folding process and/or initiating the folding process are designed as angle sensors.

## Revendications

1. Machine agricole, en particulier semoir monograine, comprenant un système de dosage (2) comportant
un boîtier de séparation (3),
un dispositif de séparation (6, 7) du système de dosage (2), lequel dispositif de séparation est disposé dans le boîtier de séparation (3),
un compartiment de stockage de semence (5) associé se trouvant du côté de séparation (7.1) du dispositif de séparation (6, 7) dans le boîtier de distribution (3),
un réservoir (4) directement associé au compartiment de stockage de semence (5, 5.1) du boîtier de séparation (3),
une cloison (19) disposée entre le réservoir (4) et le compartiment de stockage de semence (5.1),
au moins une ouverture de passage de semence (20) disposée dans la cloison (19), la taille de passage de l'ouverture de passage de semence pouvant être réglée par au moins un élément coulissant (21, 21.1) réglable par le biais d'au moins un élément de réglage (22),
**caractérisée en ce que**
l'au moins un élément de réglage (22) de l'élément coulissant (21, 21.1) réglable est conçu comme un élément de réglage motorisé,
**en ce que** l'élément de réglage (22) motorisé est relié à un ordinateur de bord (23) électronique associé à la machine agricole, par le biais d'un dispositif de transmission de données (24), en particulier d'une ligne de données,
**en ce que,** dans au moins une mémoire de l'ordinateur de bord (23), sont enregistrées et/ou stockées des données pour le réglage de la taille de passage de l'ouverture de passage (22), laquelle taille de passage est déterminée par la position du coulisseau (21) et
l'élément de réglage (22) motorisé du coulisseau (21) peut être actionné en conséquence pour le réglage de la taille de passage de l'ouverture de passage (20).

2. Machine agricole selon la revendication 1, **caractérisée en ce que**
les données enregistrées et/ou stockées dans la mémoire de l'ordinateur de bord (23) pour le réglage de la taille de passage de l'ouverture de passage (20) sont au moins des dépendances entre la taille de passage de l'ouverture de passage (20), laquelle taille de passage est déterminée par la position de coulissement du coulisseau (21), d'une part et d'autre part le type de semence, le taux d'application, le niveau de semence dans l'espace entre la cloison et le côté de séparation du dispositif de séparation et/ou l'inclinaison de pente.

3. Machine agricole selon au moins l'une des revendications 1 ou 2,
**caractérisée en ce que**
des dépendances entre la taille de passage de l'ouverture de passage (20), laquelle taille de passage est déterminée par la position de coulissement du coulisseau (20), d'une part et d'autre part le type de semence, le taux d'application et/ou l'inclinaison de pente sont enregistrés et/ou stockés dans au moins une mémoire de l'ordinateur de bord (20), et
**en ce que** l'ordinateur de bord (23) est configuré pour actionner l'élément de réglage (22) motorisé au moins en fonction de l'une des dépendances, afin de régler la taille de passage de l'ouverture de passage (20).

4. Machine agricole selon au moins l'une des revendications précédentes,
dans laquelle le dispositif de séparation (6) présente au moins un élément de séparation (7) entraîné en rotation, lequel élément de séparation comporte des ouvertures de séparation pouvant être soumises à une différence de pression par l'intermédiaire d'un appareil de génération de pression (8) pneumatique, les graines (9) distribuées à séparer se déposant sur les ouvertures de séparation,
dans laquelle au moins un élément racleur, disposé de manière réglable à proximité immédiate des ouvertures de séparation, est disposé sur l'élément de séparation (6, 7),
**caractérisée en ce que**
un élément de réglage motorisé est associé à l'élément racleur réglable,
**en ce que** l'élément de réglage motorisé est également relié à l'ordinateur de bord (23) électronique par le biais d'un dispositif de transmission de données, en particulier d'une ligne de données,
**en ce que,** dans au moins une mémoire de l'ordinateur de bord (23), sont enregistrées et/ou stockées des données pour le réglage de l'au moins un élément racleur et
l'élément de réglage motorisé de l'élément racleur peut être actionné en conséquence pour le réglage de celui-ci.

5. Machine agricole selon au moins l'une des revendications précédentes,
**caractérisée en ce que**
les données pour le réglage de la position de coulissement de l'élément coulissant (21, 21.1) et pour le réglage de l'élément racleur sont liées entre elles, et
**en ce que,** en fonction des données enregistrées et/ou stockées sur les éléments de réglage (22) motorisés respectivement associés de l'élément coulissant (21, 21.1) et de l'élément racleur, ceux-ci peuvent être actionnés en conséquence au moment correspondant.

6. Machine agricole selon au moins l'une des revendications précédentes,
**caractérisée en ce que**
l'ordinateur de bord (23) présente au moins un dispositif d'entrée,
**en ce que** par le biais de ce dispositif d'entrée, le type de semence, le taux d'application souhaité, en particulier le nombre de graines à distribuer par unité de surface ou par distance parcourue, une inclinaison de pente correspondante, en particulier l'inclinaison de pente attendue et/ou réelle du champ à cultiver, une inclinaison de pente moyenne peuvent être entrés manuellement par l'intermédiaire du dispositif d'entrée et/ou par l'intermédiaire d'un capteur (25) pour la détermination de l'inclinaison de pente et/ou peuvent être transmis et/ou transférés par l'intermédiaire d'une ligne de données (26).

7. Machine agricole selon au moins l'une des revendications précédentes,
**caractérisée en ce que**
au moins un capteur (25) est associé au système de dosage (2) pour la détermination de l'inclinaison de pente,
**en ce que** les données de l'inclinaison de pente, lesquelles données sont déterminées par le capteur (25) pour la détermination de l'inclinaison de pente, peuvent être transmises à l'ordinateur de bord (23) par l'intermédiaire d'une ligne de données (26), et
**en ce que** l'ordinateur de bord (23) est configuré pour actionner en conséquence l'élément de réglage (22) de l'élément coulissant (21, 21.1) et/ou de l'élément racleur à l'aide des données transmises de l'inclinaison de pente.

8. Machine agricole selon au moins l'une ou plusieurs des revendications précédentes, **caractérisée en ce que**
la machine agricole est configurée de manière à ce que, lors d'un déplacement transversal à la pente, lorsque l'ouverture de passage de semence (20) dans la cloison (19) du dispositif de séparation se trouve du côté ascendant de la pente par rapport au dispositif de séparation (6), de sorte que le compartiment de stockage de semence (5.1) se trouve sur le côté du dispositif de séparation (6, 7) ascendant de la pente, la taille de passage de l'ouverture de passage de semence (20) est réglée, par l'intermédiaire de l'ordinateur de bord (23) par une commande correspondante de l'élément de réglage (22) du coulisseau (21), plus petite que lorsque l'ouverture de passage de semence (20) dans la cloison (19) se trouve, par rapport au dispositif de séparation (6, 7), sur le côté descendant de la pente, de sorte que le compartiment de réserve de semence (5.1) se trouve sur le côté descendant de la pente par rapport au dispositif de séparation (6, 7).

9. Machine agricole selon au moins l'une ou plusieurs des revendications précédentes, **caractérisée en ce que**
la machine agricole est configurée de manière à ce que, lors d'un déplacement transversal à la pente, lorsque l'ouverture de passage de semence (20) dans la cloison (19) du dispositif de séparation (6) se trouve du côté descendant de la pente par rapport au dispositif de séparation (6, 7), de sorte que le compartiment de stockage de semence (5.1) se trouve sur le côté descendant de la pente par rapport au dispositif de séparation (6, 7), la taille de passage de l'ouverture de passage de semence (20) est réglée, par l'intermédiaire de l'ordinateur de bord (23), par une commande correspondante de l'élément de réglage (22) du coulisseau (21), plus grande que lorsque l'ouverture de passage de semence (20) dans la cloison (19) se trouve, par rapport au dispositif de séparation (6, 7), sur le côté ascendant de la pente, de sorte que le compartiment de réserve de semence (5.1) se trouve sur le côté ascendant de la pente par rapport au dispositif de séparation (6, 7).

10. Machine agricole selon au moins l'une des revendications 8 ou 9, **caractérisée en ce que**
la machine agricole est configurée de manière à ce que, par l'intermédiaire de l'ordinateur de bord (23) par une commande correspondante de l'élément de réglage (22) du coulisseau (21), la taille de passage de l'ouverture de passage (20) dans la cloison (19) soit réglée, lors d'un trajet d'épandage dans le plan, à une taille intermédiaire par rapport aux réglages lors d'un trajet transversal à la pente, lorsque l'ouverture de passage (20) dans la cloison (19) se trouve, par rapport au dispositif de séparation (6, 7), sur le côté descendant de la pente, en sorte que le compartiment de stockage de semence (5.1) se trouve du côté descendant de la pente, ou lorsque l'ouverture de passage (20) se trouve du côté ascendant de la pente par rapport au dispositif de séparation (6, 7), en sorte que le compartiment de stockage de semence (5.1) se trouve du côté ascendant de la pente.

11. Machine agricole selon au moins l'une ou plusieurs des revendications 1 à 7 précédentes, **caractérisée en ce que**
la machine agricole est configurée de telle sorte que, lors du déplacement dans le sens descendant de la pente, la taille de passage de l'ouverture de passage (20) dans la cloison (19) est réglée, par l'intermédiaire de l'ordinateur de bord (23) par une commande correspondante de l'élément de réglage (22) du coulisseau (21), plus petite que lorsque la machine agricole se déplace vers l'avant sur une surface au moins approximativement horizontale et
**en ce que,** lors d'un déplacement dans le sens ascendant de la pente, la taille de passage de l'ouverture de passage (20) est réglée, par l'intermédiaire de l'ordinateur de bord (23) par une commande correspondante de l'élément de réglage (22) du coulisseau (21), plus grande que lorsque la machine agricole se déplace vers l'avant sur une surface au moins approximativement horizontale.

12. Machine agricole selon au moins l'une des revendications précédentes,
**caractérisée en ce que**
un capteur permettant de déterminer le niveau de semence est disposé dans l'espace entre la cloison (19) et le côté de séparation (7.1) du dispositif de séparation (7),
**en ce que** le capteur est configuré pour transférer des données concernant ce niveau de semence à l'ordinateur de bord (23) et
en fonction de ces données, l'élément de réglage (22) motorisé peut être commandé en conséquence pour le réglage de la taille de passage de l'ouverture de passage (20) dans la cloison (19).

13. Machine agricole selon au moins l'une des revendications précédentes,
dans laquelle la machine agricole présente au moins deux cadres latéraux (28) pouvant être rabattus sur une partie centrale (27) respectivement autour d'un axe, s'étendant dans le sens du déplacement, d'au moins approximativement 90°, par le biais d'un système de rabattement motorisé, d'une position de travail à une position de transport, les cadres latéraux comportant des systèmes de dosage (2) disposés sur eux,
**caractérisée en ce que**
des moyens permettant la détection du processus de rabattement et/ou du déclenchement du processus de rabattement sont associés au système de rabattement motorisé, lesquels moyens sont configurés pour envoyer des signaux à l'élément de réglage (22) motorisé du coulisseau (21) avant ou au début du processus de rabattement des cadres latéraux (28) comportant les systèmes de dosage (2) disposés sur ceux-ci dans la position de transport, afin que le coulisseau (21) respectif soit amené dans une position fermant l'ouverture de passage (20).

14. Machine agricole selon la revendication 13, **caractérisée en ce que**
les moyens permettant la détection du processus de rabattement et/ou du déclenchement du processus de rabattement sont configurés sous forme de capteurs d'angle.
